# EUROPEAN PATENT SPECIFICATION

(11) **EP 1 726 613 B1**
(45) Date of publication and mention of the grant of the patent: **29.08.2012**
(21) Application number: 06010988.1
(22) Date of filing: 29.05.2006
(51) Int. Cl.: C08J 9/28, C08J 5/18, B82B 3/00, B81B 1/00, A61L 31/00, B29C 41/28, B29L 7/00

(54) **Honeycomb composite film, and method for producing the same**
Kompositfilm mit Wabenstruktur und Verfahren zu dessen Herstellung
Film composite en structure de nid d'abeilles et méthode pour sa fabrication

(30) Priority: 27.05.2005 JP 2005156475
(43) Date of publication of application: 29.11.2006
(73) Proprietor: FUJIFILM Corporation, Minato-ku Tokyo (JP)
(72) Inventor: Washizu, Shintaro, Minato-ku Tokyo (JP); Yamazaki, Hidekazu, Minami-Ashigara-shi Kanagawa (JP); Yamanouchi, Junichi, Ashigarakami-gun Kanagawa (JP); Naruse, Hideaki, Ashigarakami-gun Kanagawa (JP)
(74) Representative: HOFFMANN EITLE

(56) References cited:
- EP-A- 1 616 584
- WO-A-2006/014009
- TAKEHIRO NISHIKAWA ET AL: "Fabrication of Honeycomb Film of an Amphiphilic Copolymer at the Air-Water Interface" LANGMUIR, ACS, WASHINGTON, DC, US, vol. 18, no. 15, 19 June 2002 (2002-06-19), pages 5734-5740, XP002979928 ISSN: 0743-7463
- BOER DE B ET AL: "MICROPOROUS HONEYCOMB-STRUCTURED FILMS OF SEMICONDUCTING BLOCK COPOLYMERS AND THEIR USE AS PATTERNED TEMPLATES" ADVANCED MATERIALS, WILEY VCH, WEINHEIM, DE, vol. 12, no. 21, 2 November 2000 (2000-11-02), pages 1581-1583, XP000976734 ISSN: 0935-9648
- PATENT ABSTRACTS OF JAPAN vol. 2003, no. 12, 5 December 2003 (2003-12-05) & JP 2003 294905 A (FUJI PHOTO FILM CO LTD), 15 October 2003 (2003-10-15)
- PATENT ABSTRACTS OF JAPAN vol. 2000, no. 23, 10 February 2001 (2001-02-10) & JP 2001 157574 A (TERUMO CORP), 12 June 2001 (2001-06-12)
- MARUYAMA N ET AL: "Mesoscopic patterns of molecular aggregates on solid substrates" PREPARATION AND CHARACTERIZATION, ELSEVIER SEQUOIA, NL, vol. 327-329, 31 August 1998 (1998-08-31), pages 854-856, XP004355842 ISSN: 0040-6090
- PATENT ABSTRACTS OF JAPAN vol. 2003, no. 12, 5 December 2003 (2003-12-05) & JP 2003 318010 A (FUJI PHOTO FILM CO LTD), 7 November 2003 (2003-11-07)
- PATENT ABSTRACTS OF JAPAN vol. 007, no. 145 (M-224), 24 June 1983 (1983-06-24) & JP 58 056825 A (MITSUBISHI GAS KAGAKU KK), 4 April 1983 (1983-04-04)

## Description

### BACKGROUND OF THE INVENTION

### Field of the Invention

The present invention relates to a honeycomb composite film utilizing a honeycomb porous film which is produced by self-organization and relates to a method for producing the honeycomb composite film.

### Description of the Related Art

Recently, improvements in integration degree, high-densification of information volume, high-resolution performance of image information are becoming more highly demanded in the areas of optical materials and electronic materials. Accompanying this trend, films used in these areas are demanded that they be formed in a finely patterned structure. In the study of regenerative medical techniques, it is known that a film having a fine structure on a surface thereof is effective as a base material to be a framework in cell culturing (see Japanese Patent Application Laid-Open (JP-A) No. 2001-157574).

As for fine patterning of the films stated above, there have been known various methods such as optical lithography techniques utilizing evaporation methods using a mask, photochemical reactions, and polymerization reactions; and laser abrasion techniques, and these techniques have been put into practical use.

Further, it is known that a film having a micron scale honeycomb structure can be obtained by casting a dilute solution of a polymer having a specific structure in a condition of high-humidity (see Japanese Patent Application Laid Open (JP-A) Nos. 2002-335949 and 2002-347107). By containing functional fine particles in such a film having a honeycomb structure, the film is used as optical materials or electronic materials. For example, by containing a luminescence material in such film, the film can be used as a display device (see Japanese Patent Application Laid Open (JP-A) No. 2003-128832).

A film with a fine pattern formed thereon is also used for polarizing plates which are optical materials. For example, there are films having a moth-eye structure and exerting anti-reflection functions. On surfaces of these films, a regular and fine pattern is formed in sub-microns to several microns size.

In this case, a method of which a printing plate utilizing a micro processing technique focused on optical lithography is prepared, and the structure of the printing plate is transcribed on a base material, becomes mainstream (see Japanese Patent Application Laid-Open (JP-A) No. 2003-302532.

With the use of a top-down method as disclosed in JP-A No. 2003-302532, the preparation of a printing plate which determines a fine structure is complicated and requires many process steps, resulting in high-cost manufacture. In addition, it is difficult to produce a printing plate having a large area.

To resolve these problems, a bottom-up method is proposed in which a self-organized film having a fine structure (honeycomb-like porous film) is produced by forming a fine structure of film in a way of self-association and making use of self-organization of a film having a regularly formed fine structure.

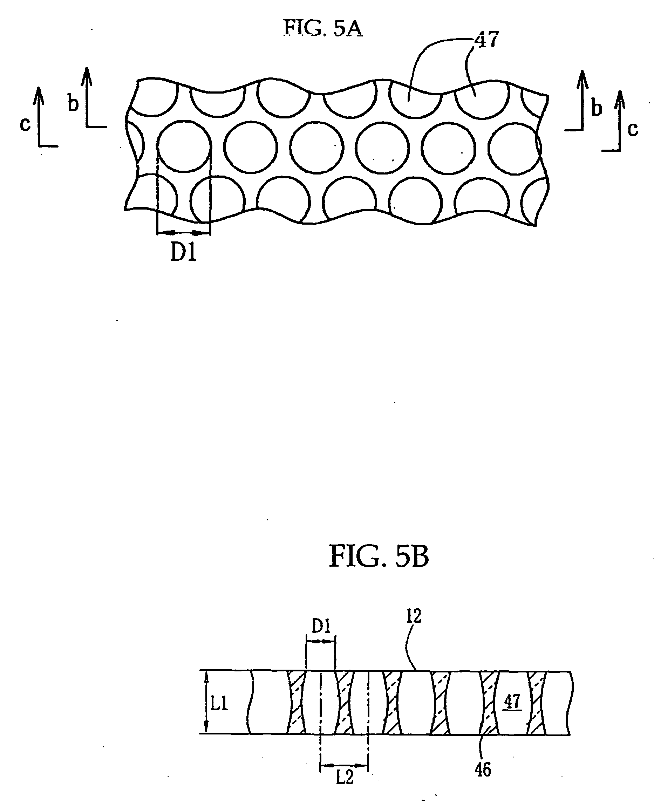

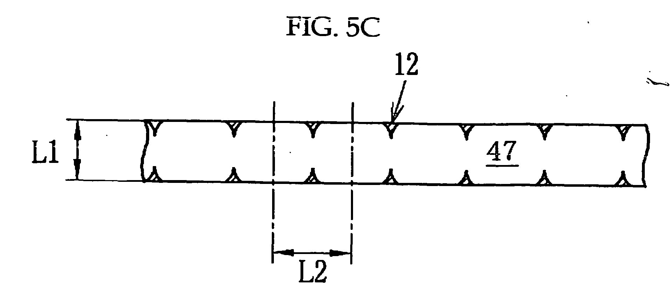

Examples of the structure of the honeycomb-like porous film include, as shown in FIGS. 5A, 5B, and 5C, a film having a structure of fine holes each of the fine holes penetrating through to the other side of the film with regularity in the thickness direction, and in most cases, it takes a structure in which the holes are also penetrating through in the lateral direction of the film surface between adjacent penetrating holes. Another example thereof is a honeycomb-like porous film in which holes are not penetrating into one surface side of the each film shown in FIGS. 5A, 5B, and 5C.

The honeycomb-like porous film can solve the above-mentioned problems, however, the honeycomb-like porous film is a thin film having a number of holes, is weak in strength, tears easily, and is poor in handleability. Accordingly, these problems prevent its wide use, and the solution of the problem is desired.

"Fabrication of Honeycomb Film of an Amphiphilic Copolymer at the Air-Water Interface" Langmuir 2002, 18, 5734-5740, Takehiro Nishikawa et al (XP002979928), teaches a fabrication method for a thin polymer film having a regular array of micropores. This 'honeycomb' film is fabricated by depositing a dilute solution of amphiphilic polymer on the surface of a body of water. A film fabricated in this way has no bottom layer to its pores.

"Microporous Honeycomb-Structured Films of Semiconducting Block Copolymers and their use as Patterned Templates" Ab. Mater. 2000, 12, No.21, November 2, Bert de Boer et al, teaches the formation of a honeycomb structure from rod-coil block copolymers and amphiphiles by casting thin films in appropriate solvents on solid substrates.

EP-A-1 616 584 teaches a honeycomb film made of a biodegradable polymer for use as an anti-adhesion membrane to prevent adhesion after an operation. The anti-adhesion membrane comprises a honeycomb film made of polylactic acid and a phospholipid, cast in an organic solvent solution onto a substrate such as a glass, metal or a silicon wafer.

EP-A-1 783 162, prior art under Article 54(3) EPC, discloses a process for producing a submicro-honeycomb structured film by providing a water-insoluble polymer dissolved in a water-incompatible organic solvent on a surface and evaporating the solvent in damp air. Examples of the polymer include polystyrene, polyalkylacrylamide and polycaprolactone. The substrate is preferably or glass or metal which may be surface treated to improve its wettability. The techniques of surface treatment include a silane coupling treatment or a uni-molecular film forming process.

### SUMMARY OF THE INVENTION

The object of the present invention is to provide a honeycomb composite film which allows easy increases in size to have a larger area, is increased in strength, and is improved in handleability; and also relates to a method for producing the honeycomb composite film at low-cost.

The specific means to solve the aforesaid problems are as follows:
1. A honeycomb composite film comprising:
   a porous film having a honeycomb structure prepared by self-organisation;
   a provisional substrate; and
   an exfoliation layer between the porous film and the provisional substrate to facilitate exfoliation of the latter from the porous film;
   characterised in that the exfoliation layer comprises a silicone resin, a fluorine resin, an aminoalkyd resin, a polyester resin or a wax.
2. A honeycomb composite film according to the above 1, wherein the film having the honeycomb structure has an exfoliation layer on each of both surfaces thereof, and a provisional substrate on the each of the exfoliation layers.
3. A honeycomb composite film according to any of the above 1 or 2, wherein the film having the honeycomb structure has an exfoliation layer on one surface thereof, a provisional substrate on the exfoliation layer, and a substrate on the opposite surface with no exfoliation layer formed thereon.
4. A honeycomb composite film according to any of the above 1 to 3, wherein the water contact angle of a surface of the provisional substrate is 2° to 120°.
5. A honeycomb composite film according to any of the above 1 to 4, wherein the film having the honeycomb structure is subjected to a stretching treatment.
6. A honeycomb composite film according to the above 4, wherein the stretching is uniaxial stretching, sequential biaxial stretching, simultaneous biaxial stretching, or triaxial stretching.
7. A honeycomb composite film according to any of the above 1 to 6, the film having the honeycomb structure has a metal layer on a surface thereof.
8. A honeycomb composite film according to the above 7, wherein the metal layer comprises at least one of gold, silver, copper, aluminum, iron, nickel, titanium, tungsten, chrome, or alloys thereof.
9. A honeycomb composite film according to any of the above 1 to 8, wherein a refractive index controlling material is packed in holes in the film having the honeycomb structure.
10. A honeycomb composite film according to any of the above 1 to 9, wherein the material of the film having the honeycomb structure is at least one hydrophobic polymer or amphipathic compound.
11. A honeycomb composite film according to the above 10, wherein the amphipathic compounds are amphipathic polymers.
12. A honeycomb composite film according to any of the above 1-11, wherein the provisional substrate(s) and the exfoliation layer(s) are stripped before the honeycomb composite film is used.
13. A honeycomb composite film according to any of the above 1-12, wherein the honeycomb composite film is used for retardation films, polarizing films, screens, color filters, display materials, cell culture materials, wound protective films, films for transdermal absorption agents, acoustic oscillation materials, sound-absorbing materials, or damping materials.
14. A method for producing a honeycomb composite film comprising:
   forming an exfoliation layer on a provisional substrate, and
   forming a film,
   the film is formed in the steps of:
      casting a solution comprising an organic solvent and a high-polymer compound on the exfoliation layer,
      forming droplets in the obtained film, and
      vaporizing the organic solvent and the droplets to produce a honeycomb-like porous film having holes in the film.
15. A method according to the above 14, further comprising stretching the honeycomb-like porous film.
16. A method according to the above 14 or 15, further comprising forming a metal layer on a surface of the honeycomb-like porous film.

### BRIEF DESCRIPTION OF THE DRAWINGS

FIG. 1A is a pattern diagram showing one example of the honeycomb composite film of the present invention.
FIG. 1B is a pattern diagram showing another example of the honeycomb composite film of the present invention.
FIG.1C is a pattern diagram showing yet another example of the honeycomb composite film of the present invention.
FIG. 2 is a process chart explaining one example of the method for producing a honeycomb composite film of the present invention.
FIG. 3 is a schematic diagram showing one example of a film production unit used for the method for producing a honeycomb composite film of the present invention.
FIG. 4A is a schematic diagram showing one example of the method for forming a honeycomb composite film of the present invention and illustrating the state where a high-polymer film is formed on a flow casting belt.
FIG. 4B is a schematic diagram showing one example of the method for forming a honeycomb composite film of the present invention and illustrating the state where droplets are condensed and grown.
FIG. 4C is a schematic diagram showing one example of the method for forming a honeycomb composite film of the present invention and illustrating the state where the organic solvent is volatilized from the high-polymer film by dry air.
FIG. 4D is a schematic diagram showing one example of the method for forming a honeycomb composite film of the present invention and illustrating the state where the moisture content is volatilized from the high-polymer film by dry air.
FIG. 5A is a top view showing one example of a honeycomb composite film of the present invention.
FIG. 5B is a cross-sectional diagram as viewed from the line b-b of the honeycomb composite film shown in FIG. 5A.
FIG. 5C is a cross-sectional diagram as viewed from the line c-c of the honeycomb composite film shown in FIG. 5A.
FIG. 6 is a schematic diagram showing another example of a film production unit used for the method for producing a honeycomb composite film of the present invention.
FIG. 7 is a schematic diagram showing yet another example of a film production unit used for the method for producing a honeycomb composite film of the present invention.
FIG. 8 is a schematic diagram showing still yet another example of a film production unit used for the method for producing a honeycomb composite film of the present invention.
FIG. 9 is a schematic diagram showing still yet another example of a film production unit used for the method for producing a honeycomb composite film of the present invention.
FIG.10 is a schematic diagram showing still yet another example of a film production unit used for the method for producing a honeycomb composite film of the present invention.

### DESCRIPTION OF THE PREFERRED EMBODIMENTS

### (Honeycomb Composite Film)

The honeycomb composite film of the present invention has a film having a honeycomb structure, an exfoliation layer and a provisional substrate on at least one surface of the film such that the provisional substrate is exfoliatable, and further has an adhesive layer and other film layers in accordance with the necessity.

The film having a honeycomb structure is preferably a honeycomb porous film produced by self-organization.

The provisional substrate may be formed, for example, such that it is exfoliatable, by using a rubber-like soft polymer substrate in typical room temperature. The honeycomb composite film has an exfoliation layer on at least one surface of the film having the honeycomb structure and has a provisional substrate on the exfoliation layer.

As an embodiment of the honeycomb composite film, it is preferable to have an exfoliation layer on each of both surfaces of a film having the honeycomb structure (which may be referred to as "honeycomb-like porous film"), and a provisional substrates on each of the both exfoliation layers.

As another embodiment of the honeycomb composite film, it is preferable that the honeycomb composite film has an exfoliation layer on one surface of the film having a honeycomb structure and a provisional substrate on the exfoliation layer and further has a substrate on the surface of the film having the honeycomb structure with no exfoliation layer formed thereon.

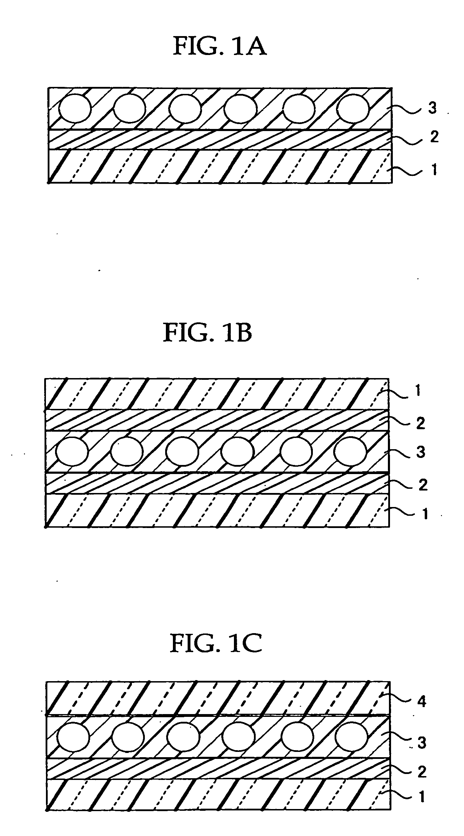

As one example of the honeycomb composite film, as shown in FIG. 1A, the honeycomb composite film is provided with a provisional substrate 1, an exfoliation layer 2 on the provisional substrate 1, and a honeycomb-like porous film 3 on the exfoliation layer 2. As another example of the honeycomb composite film, as shown in FIG.1B, the honeycomb composite film is provided with a provisional substrate 1, an exfoliation layer 2 on the provisional substrate 1, a honeycomb-like porous film 3 on the exfoliation layer 2, another exfoliation layer 2 on the honeycomb-like porous film 3, and another provisional substrate 1 on the another exfoliation layer 2.

As yet another example of the honeycomb composite film, as shown in FIG.1C, the honeycomb composite film is provided with a provisional substrate 1, an exfoliation layer 2 on the provisional substrate 1, a honeycomb-like porous film 3 on the exfoliation layer 2, and a substrate 4 on the honeycomb-like porous film 3.

According to the embodiments as shown in FIGS.1A to 1C, the provisional substrates and the exfoliation layers may be stripped before the honeycomb composite films are used.

### - Film Having Honeycomb Structure -

The film material used for the film having a honeycomb structure is not particularly limited and may be suitably selected in accordance with the intended use, and for example, at least one selected from hydrophobic polymers and amphipathic compounds is preferably used.

The hydrophobic polymers are not particularly limited, may be suitably selected from among hydrophobic polymers known in the art, and examples thereof include vinyl polymers such as polyethylene, polypropylene, polystyrene, polyacrylate, polymethacrylate, polyacrylamide, polymethacrylamide, polyvinyl chloride, polyvinylidene chloride, polyvinylidene fluoride, polyhexafluoropropene, polyvinyl ether, polyvinyl carbazole, polyvinyl acetate, and polytetrafluoroethylene; polyesters such as polyethylene terephthalate, polyethylene naphthalate, polyethylene succinate, polybutylene succinate, and polylactate; polylactones such as polycaprolacton; polyamides or polyimides such as nylon and polyamide acid; polyurethanes, polyureas, polycarbonates, polyaromatics, polysulfones, polyether sulfones, and polysiloxane derivatives. These hydrophobic polymers may be in the form of a homopolymer, a copolymer, or a polymer blend from the perspective of solubility, optical properties, electrical physical properties, film strength and elastic property. Each of these polymers may be used alone or may be used in combination with two or more.

The amphipathic compounds are not particularly limited and may be suitably selected in accordance with the intended use, and examples thereof include amphipathic polymers.

The amphipathic polymers are not particularly limited, may be suitably selected in accordance with the intended use, however, an amphipathic polymer is preferably used.

The amphipathic polymer is not particularly limited, may be suitably selected in accordance with the intended use, and examples thereof include amphipathic polymers having polyacrylamide as the main skeleton, a dodecyl group as hydrophobic side chains, and a carboxyl group as hydrophilic side chains; polyethyleneglycol/polypropyleneglycol-blocked copolymers.

It is preferable that the hydrophobic side chains be nonpolar straight chain groups such as alkylene groups, and phenylene groups and have a structure which does not branch hydrophilic groups such as polar groups and ionic dissociation groups to the terminals, except for linked-groups such as ester groups and amide groups. The hydrophobic side chains preferably contain 5 or more methylene units when an alkylene group is used.

It is preferable that the hydrophilic side chains have a structure having hydrophilic sites such as polar groups, ionic dissociation groups or oxyethylene groups at the terminals thereof through linked portions such as alkylene groups.

The ratio of the hydrophobic side chains to the hydrophilic side chains differs depending on the size, the strength of nonpolarity or polarity of the hydrophobic side chains and the hydrophilic side chains, and the strength of hydrophobicity of the hydrophobic organic solvent, and cannot be uniformly defined. However, the unit ratio (hydrophobic side chains/hydrophilic side chains) is preferably 9.9/0.1 to 5.5/4.5. In the case of a copolymer, the copolymer is preferably a block copolymer in which a block is formed with hydrophobic side chains and hydrophilic side chains within the range where it does not affect the solubility to the hydrophobic solvent, rather than an alternating polymer of hydrophobic side chains and hydrophilic side chains.

The number average molecular mass (Mn) of the hydrophobic polymer and the amphipathic compound is preferably 10,000 to 10,000,000, and more preferably 50,000 to 1,000,000.

Examples of the amphipathic compound include amphipathic compounds other than the amphipathic polymers. The amphipathic compounds other than the amphipathic polymers are not particularly limited, may be suitably selected in accordance with the intended use, and preferred examples thereof include surfactants.

The surfactants are not particularly limited, and examples thereof include compounds represented by the following General Formula (I).

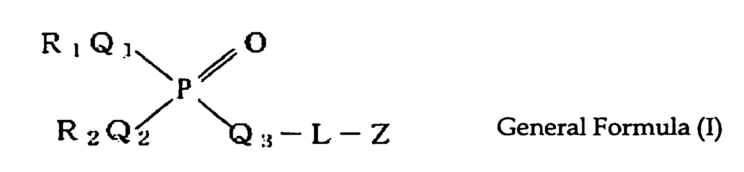

In the General Formula (I), R₁ represents any one of an aliphatic group, an alicyclic compound group, an aromatic group, and a heterocycle; R₂ represents any one of an aliphatic group, an alicyclic compound group, an aromatic group, a heterocycle, and -L-Z; Q₁, Q₂, and Q₃ respectively represent any one of a single bond, an oxygen atom, a sulfur atom, and -N (R₃)-; R₃ represents any one of hydrogen atom and R₂; L represents a divalent-bonded group; and Z represents an ionic group. It should be noted that "single bond" means that there is no element.

In the General Formula (I), preferred examples of the aliphatic group represented by R₁ include straight chain or branched nonsubstituted alkyl groups having 1 to 40 carbon atoms, straight chain or branched substituted alkyl groups having 1 to 40 carbon atoms, straight chain or branched nonsubstituted alkenyl groups having 2 to 40 carbon atoms, straight chain or branched substituted alkenyl groups having 2 to 40 carbon atoms, straight chain or branched nonsubstituted alkynyl groups having 2 to 40 carbon atoms, and straight chain or branched substituted alkynyl groups having 2 to 40 carbon atoms.

Examples of the straight chain or branched nonsubstituted alkyl groups having 1 to 40 carbon atoms include methyl groups, ethyl groups, n-propyl groups, iso-propyl groups, n-butyl groups, sec-butyl groups, tert-butyl groups, n-amyl groups, tert-amyl groups, n-hexyl groups, n-heptyl groups, n-octyl groups, tert-octyl groups, 2-ethylhexyl groups, n-nonyl groups, 1,1,3-trimethylhexyl groups, n-decyl groups, n-dodecyl groups, cetyl groups, hexadecyl groups, 2-hexyldecyl groups, octadecyl groups, icosyl groups, 2-octyldodecyl groups, docosyl groups, tetracosyl groups, 2-decyltetradecyl groups, and tricosyl groups.

Examples of the straight chain or branched substituted alkyl groups having 1 to 40 carbon atoms include alkoxyl groups, ary groups, halogen atoms, carbon ester groups, carbon amide groups, carbamoyl groups, oxycarbonyl groups, and phosphoester groups. Specific examples thereof include benzyl groups, β-phenethyl groups, 2-methoxyethyl groups, 4-phenylbutyl groups, 4-acetoxyethyl groups, 6-phenoxyhexyl groups, 12-phenyldodecyl groups, 18-phenyloctadecyl groups, heptadecyl fluorooctyl groups, 12-(p-chlorophenyl) dodecyl groups, and 2-(diphenyl phosphate) ethyl groups.

Examples of the straight chain or branched nonsubstituted alkenyl groups having 2 to 40 carbon atoms include vinyl groups, allyl groups, 3-butenyl groups, 2-methyl-2-butenyl groups, 4-pentenyl groups, 3-pentenyl groups, 3-methyl-3-pentenyl groups, 5-hexenyl groups, 4-hexenyl groups, 3-hexenyl groups, 2-hexenyl groups, 7-octenyl groups, 9-decenyl groups, oleyl groups, linoleyl groups, and linolenyl groups.

Examples of the straight chain or branched substituted alkenyl groups having 2 to 40 carbon atoms include 2-phenylvinyl groups, 4-acetyl-2-butecyl groups, 13-methoxy-9-octadecenyl groups, and 9,10-dibromo-12-octadecenyl groups.

Examples of the straight chain or branched nonsubstituted alkynyl groups having 2 to 40 carbon atoms include acetylene groups, propargyl groups, 3-butynyl groups, 4-pentynyl groups, 5-hexynyl groups, 4-hexynyl groups, 3-hexynyl groups, and 2-hexynyl groups.

Examples of the straight chain or branched substituted alkynyl groups having 2 to 40 carbon atoms include alkoxyl groups, and aryl groups. Specific examples thereof include 2-phenyl acetylene group, and 3-phenyl propargyl group.

In the General Formula (I), preferred examples of the alicyclic compound group represented by R₁ include substituted or nonsubstituted cycloalkyl groups having 3 to 40 carbon atoms, and substituted or nonsubstituted cycloalkenyl groups having 4 to 40 carbon atoms.

Preferred examples of the aromatic group include substituted or nonsubstituted aryl groups having 6 to 50 carbon atoms.

Examples of the substituted or nonsubstituted cycloalkyl groups having 3 to 40 carbon atoms in the alicyclic compound group include cyclo propyl groups, cyclohexyl groups, 2,6-dimethylcyclohexyl group, 4-tert-butylcyclohexyl group, 4-phenylcyclohexyl group, 3-methoxycyclohexyl group, and cycloheptyl groups.

Examples of the substituted or nonsubstituted cycloalkenyl groups having 4 to 40 carbon atoms include 1-cyclohexenyl group, 2-cyclohexenyl group, 3-cyclohexenyl group, 2,6-dimethyl-3-cyclohexenyl group, 4-tert-butyl-2-cyclohexenyl group, 2-cycloheptenyl group, and 3-methyl-3-cycloheptenyl group.

Examples of substituted groups of aryl groups having 6 to 50 carbon atoms in the aromatic groups include alkyl groups, alkoxyl groups, aryl groups, and halogen atoms. Specific examples thereof include phenyl groups, 1-naphthyl groups, 2-naphthyl groups, anthranil groups, o-cresyl groups, m-cresyl groups, p-cresyl groups, p-ethylphenyl groups, p-tert-butylphenyl group, 3,5-di-tert-butylphenyl group, p-n-amylphenyl group, p-tert-amylphenyl group, 2,6-dimethyl-4-tert-butylphenyl group, p-cyclohexyl phenyl groups, octylphenyl groups, p-tert-octylphenyl group, nonylphenyl groups, p-n-dodecylphenyl group, m-methoxyphenyl groups, p-butoxyphenyl groups, m-octyloxyphenyl groups, biphenyl groups, m-chlorophenyl groups, pentachlorophenyl groups, and 2-(5-methylnaphtyl groups).

In the General Formula (I), preferred examples of the heterocycle include substituted or nonsubstituted cyclic ethers having 4 to 40 carbon atoms, and substituted or nonsubstituted nitrogenous rings having 4 to 40 carbon atoms.

Examples of the substituted or nonsubstituted cyclic ethers having 4 to 40 carbon atoms include furyl groups, 4-butyl-3-furyl group, pyranyl groups, 5-octyl-2H-pyran-3-yl group, isobenzofuranyl groups, and chromenyl groups.

Examples of the substituted or nonsubstituted nitrogenous rings having 4 to 40 carbon atoms include 2H-pyrrolyl group, imidazolyl group, pyrazolyl group, indolidinyl group, and morphoryl group.

Of these, straight chain, cyclic, or branched nonsubstituted alkyl groups having 1 to 24 carbon atoms; straight, cyclic, or branched substituted alkyl groups having 1 to 24 carbon atoms excluding the carbon atoms of the substituted groups therein; straight chain, cyclic, or branched substituted alkyl groups having 1 to 24 carbon atoms; straight chain, cyclic, or branched nonsubstituted alkenyl groups having 2 to 24 carbon atoms; straight chain, cyclic, or branched substituted alkenyl groups having 2 to 24 carbon atoms; and substituted or nonsubstituted aryl groups having 6 to 30 carbon atoms are particularly preferable.

Examples of the straight chain, cyclic, or branched nonsubstituted alkyl group having 1 to 24 carbon atoms include methyl groups, ethyl groups, n-propyl groups, n-butyl groups, n-amyl groups, n-hexyl groups, cyclohexyl groups, n-heptyl groups, n-octyl groups, 2-ethylhexyl group, n-nonyl groups, 1,1,3-trimethylhexyl group, n-decyl groups, n-dodecyl groups, cetyl groups, hexadecyl groups, 2-hexyldecyl group, octadecyl groups, icosyl groups, 2-octyldodecyl group, docosyl groups, tetracodyl group, and 2-decyltetradecyl group.

Examples of the straight chain, cyclic, or branched substituted alkyl groups having 1 to 24 carbon atoms excluding the carbon atoms of the substituted groups therein include 6-phenoxyhexyl group, 12-phenyldodecyl group, 18-phenyloctadecyl group, heptadecyl fluorooctyl group, 12-(p-chlorophenyl) dodecyl group, and 4-tert-butylcyclohexyl group.

Examples of the straight chain, cyclic, or branched nonsubstituted alkenyl group having 2 to 24 carbon atoms include vinyl groups, allyl groups, 2-methyl-2-butenyl group, 4-pentenyl group, 5-hexenyl group, 3-hexenyl group, 3-cyclohexeny group, 7-octenyl group, 9-decenyl group, oleyl groups, linoleyl groups, and linolenyl groups.

Examples of the straight chain, cyclic, or branched substituted alkenyl groups having 2 to 24 carbon atoms include 2-phenylvinyl group, and 9,10-dibromo-12-octadecenyl group.

Examples of the substituted or nonsubstituted aryl groups having 6 to 30 carbon atoms include phenyl group, 1-naphthyl group, 2-naphthyl group, p-cresyl group, p-ethylphenyl group, p-tert-butylphenyl group, p-tert-amylphenyl group, octylphenyl group, p-tert-octylphenyl group, nonylphenyl group, p-n-dodecylphenyl group, m-octyloxyphenyl group, and biphenyl group.

In the General Formula (I), as for Q₁, Q₂, and Q₃, a single bond, an oxygen atom, or -N (R3)- is preferable, and it is particularly preferable that at least two or more of the Q₁, Q₂, and Q₃ be individually an oxygen atom.

In the General Formula (I), L is preferably a group represented by the following General Formula (II).

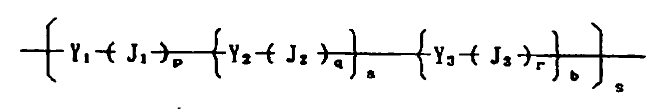

In the General Formula (II), Y₁, Y₂ and Y₃ respectively represent any one of a substituted and nonsubstituted alkylene group having 1 to 40 carbon atoms, and a substituted or nonsubstituted arylene group having 6 to 40 carbon atoms which may be the same to each other or may be different to each other; J₁, J₂, and J₃ respectively represent a divalent bonded unit which may be the same to each other or may be different to each other; p, q, and r individually represent an integer of 0 to 5; "s" represents an integer of 1 to 10; and a and b individually represent an integer of 0 to 50.

Examples of the substituted groups in Y₁, Y₂, and Y₃ include groups exemplarily shown in R₁ in the General Formula (I). Specific preferred examples of the alkylene group include methylene groups, ethylene groups, propylene groups, trimethylene groups, tetramethylene groups, pentamethylene groups, hexamethylene groups, 1,4-cyclohexylene group, octamethylene groups, decamethylene groups, and 2-methoxy-1,3-propylene groups. Specific preferred examples of the arylene group include o-phenylene groups, m-phenylene groups, p-phenylene groups, 3-chloro-1,4-phenylene group, 1,4-naphthylene group, and 1,5-naphthylene group. Of these, ethylene groups, propylene groups, trimethylene groups, tetramethylene groups, pentamethylene groups, hexamethylene groups, 1,4-cyclohexylene group, octamethylene groups, decamethylene groups, m-phenyl groups, and p-phenylene groups are particularly preferable.

Preferred examples of the divalent bonded unit in J₁, J₂, and J₃ include single bonds, -O-, -S-, -CO-, -COO-, -OCO-, -CON (R₄)-, -N (R₄) CO-, -CON (R₄)CO-, -N (R₄) CON (R₅)-, -OCON (R₄)-, -N (R₄) COO -, -SO₂-, SO₂N (R₄)-, -N (R₄)SO₂-, -N (COR₄)-, and -OP (= O)(OR₁)O-. In the examples of the divalent bonded unit, R₁ represents the same as R₁ in the General Formula (I); R₄ represents any one of hydrogen atom, a nonsubstituted alkyl group having 1 to 6 carbon atoms, and a substituted alkyl group having 1 to 6 carbon atoms excluding the carbon atoms of the substituted groups therein; and R₅ represents the same as R₄, however, they may be the same to each other or may be different to each other. Examples of the substituted groups in R₄ and R₅ include aryl groups, alkoxyl groups, and halogen atom.

Of these, -O-, -S-, -CO-, -COO-, -OCO-, -CON (R₃)- (R₃ represents hydrogen atom, a methyl group, an ethyl group, or a propyl group), -N (R₄) CO-, SO₂N (R₄)-, and -N (R₄)SO₂- are particularly preferable.

As for the p, q, and r, an integer of 0 to 3 is preferable, individually, and an integer of 0 or 1 is particularly preferable.

As for the s, an integer of 1 to 5 is preferable, and an integer of 1 to 3 is particularly preferable. As for the a and b, an integer of 0 to 20 is preferable, and an integer of 0 to 10 is particularly preferable.

As for Z in the General Formula (I), a hydrophilic anionic or cationic ion group is preferable, and a hydrophilic anionic ion group is particularly preferable.

As for the anionic group, -COOM, -SO₃M, -OSO₃M, -PO (OM)₂-OPO (OM)₂ are particularly preferable. The M represents a pair of cations, and particularly preferable examples are any one selected from alkali metal ions such as lithium ion, sodium ion, and potassium ion; alkali earth metal ions such as magnesium ion, and calcium ion); and ammonium ions.

Examples of the cationic group include -NH₃⁺·X⁻, -NH₂(R₆)⁺·⁻, -NH (R₆)₂⁺·X⁻, and -N(R₆)₃⁺·X⁻.

The R₆ represents an alkyl group having 1 to 3 carbon atoms such as methyl group, ethyl group, 2-hydroxyethyl group, n-propyl group, and iso-propyl group. Of these, methyl group and 2-hydroxyethyl group are preferable.

The X represents a pair of anions; and preferred examples are halogen ion such as fluorine ion, chloride ion, and bromine ion; complex inorganic anion such as hydroxide ion, sulfate ion, nitrate ion, and phosphate ion; and organic compound anion such as oxalate ion, formate ion, acetate ion, propionate ion, methansulfonate ion, and p-toluenesulfonate ion. Of these, chloride ion, sulfate ion, nitrate ion, and acetate ion are particularly preferable.

In the General Formula (I), examples of the R₂ include monovalent groups selected from the groups exemplarily shown in Ri, and the groups exemplarily shown in the -L-Z. When R₂ is selected from the groups exemplarily shown in Ri, R₂ may take the same structure as that of R₁ which exists in the same molecule or may take a different structure from that of R₁ which exists in the same molecule. Of these, a group selected from the groups exemplarily shown in R₁ is particularly preferable. More preferably, the total number of carbon atoms of R₁ and R₂ is 6 to 80, and particularly preferably, the total number is 8 to 50.

Hereinafter, specific examples of the surfactant will be exemplarily described, however, the surfactant used in the present invention is not limited to the disclosed examples.

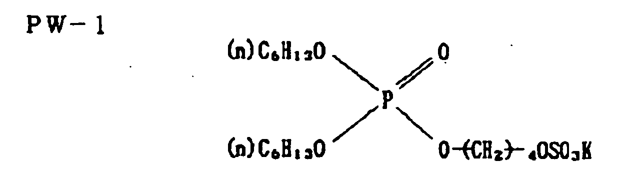

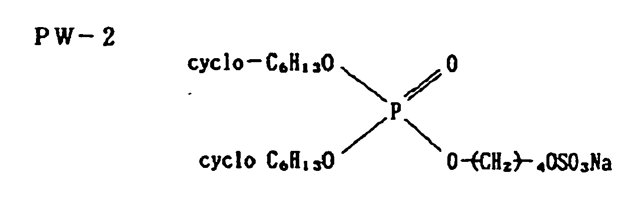

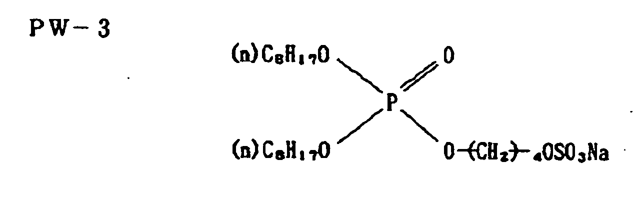

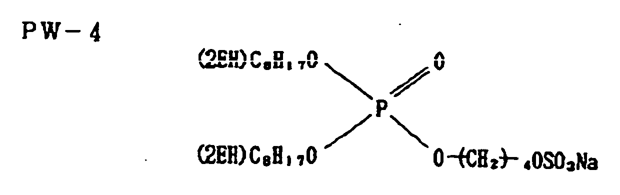

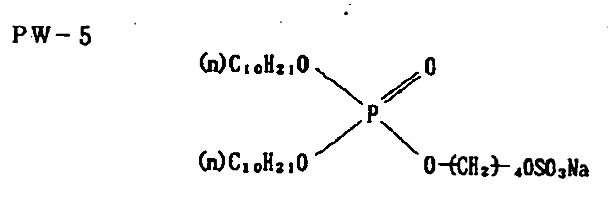

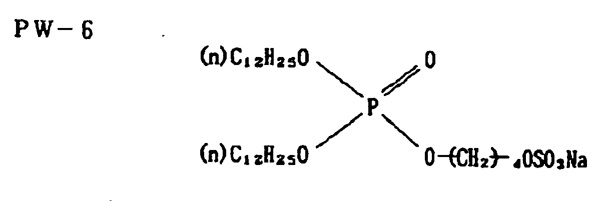

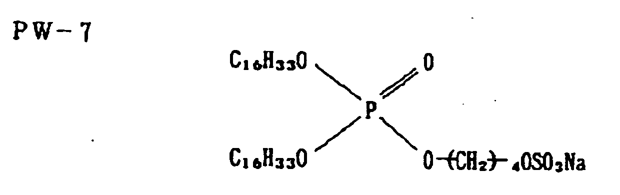

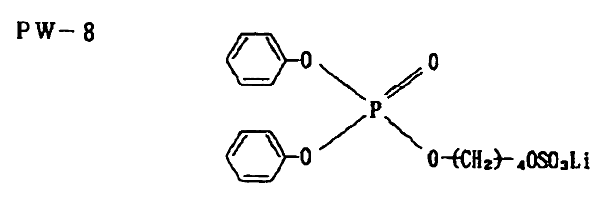

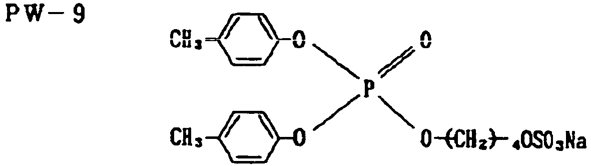

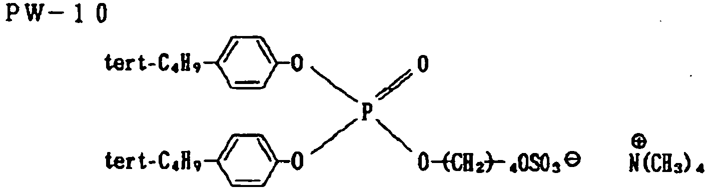

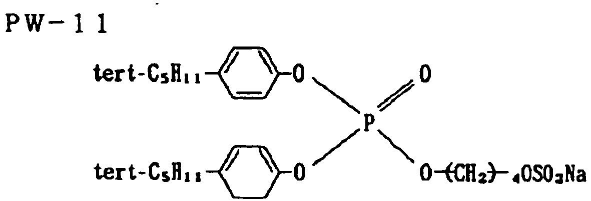

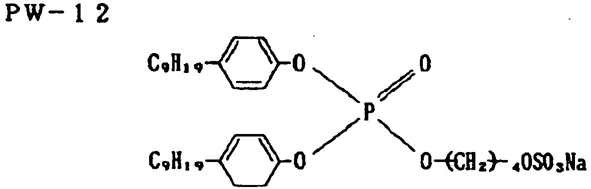

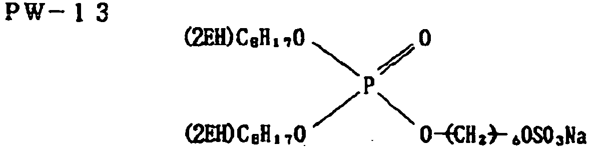

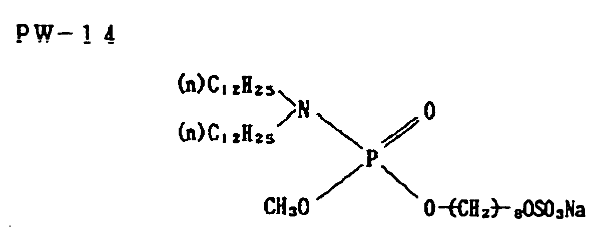

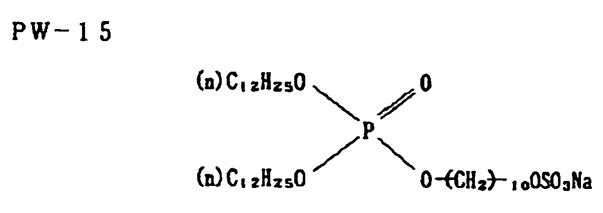

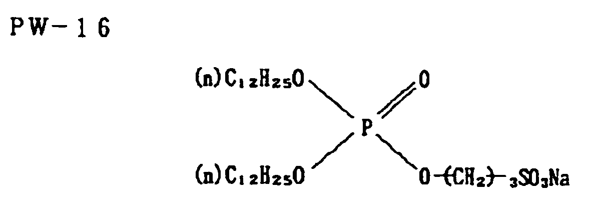

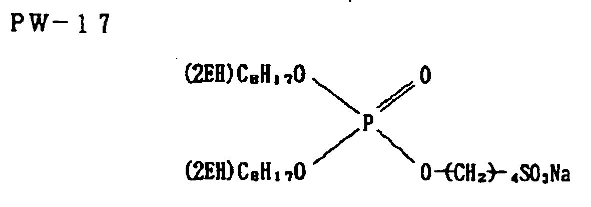

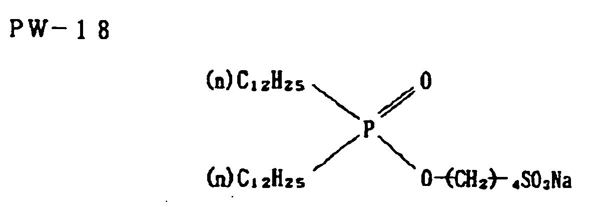

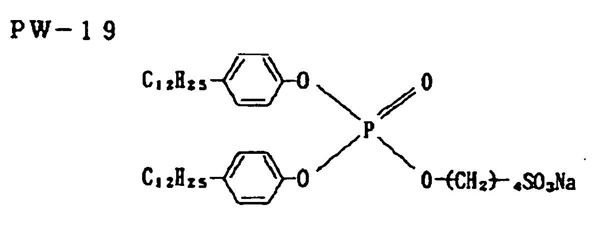

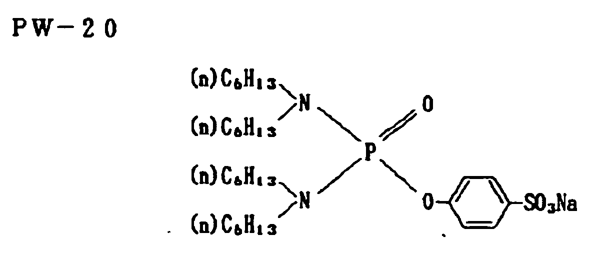

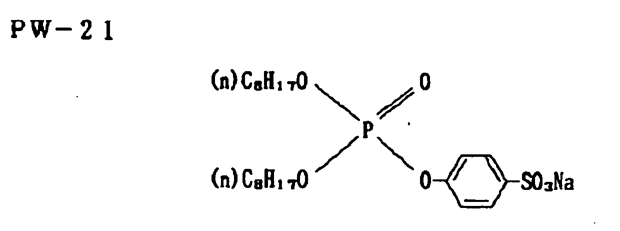

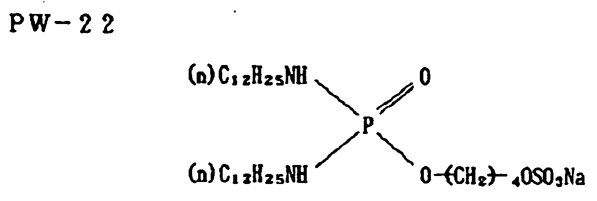

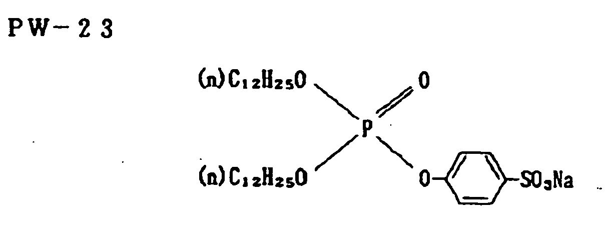

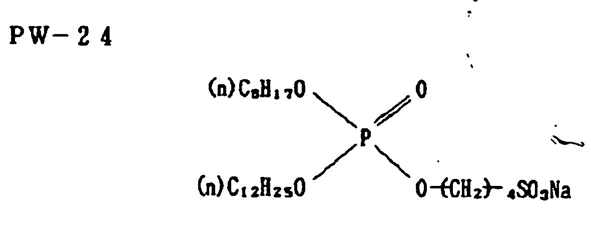

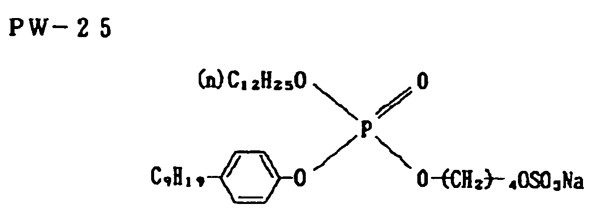

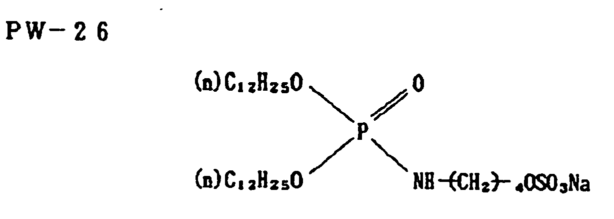

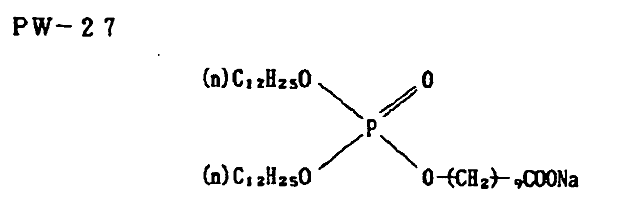

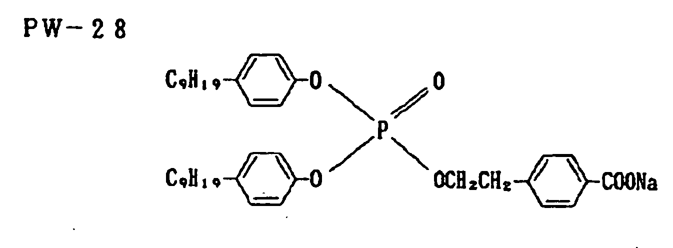

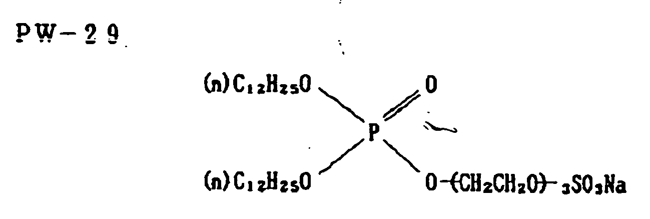

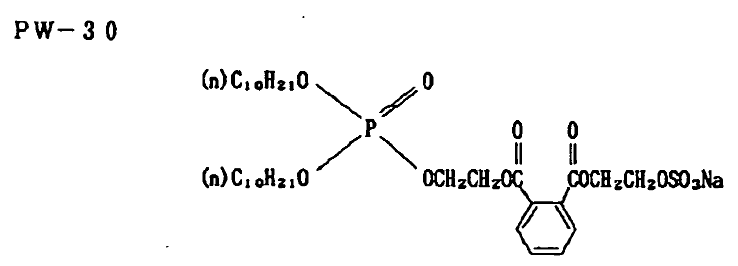

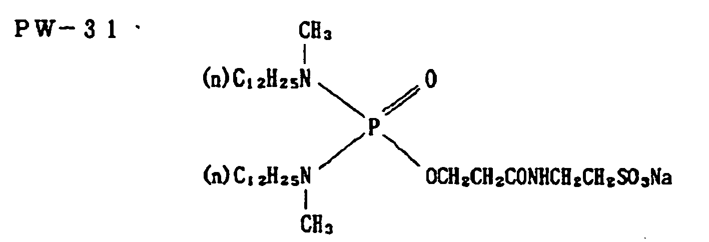

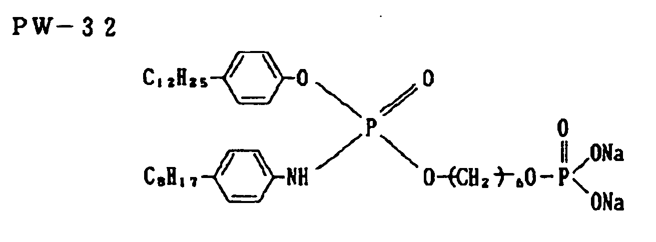

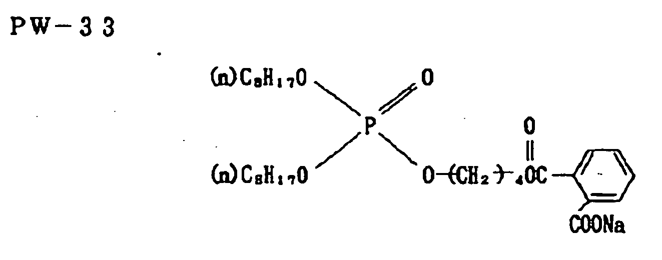

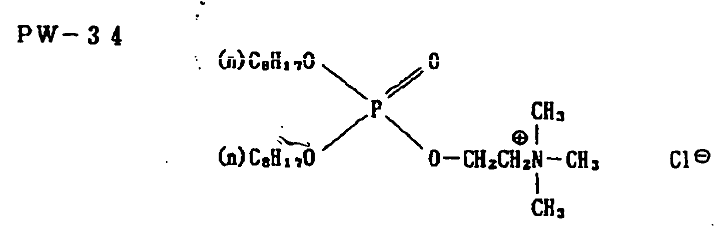

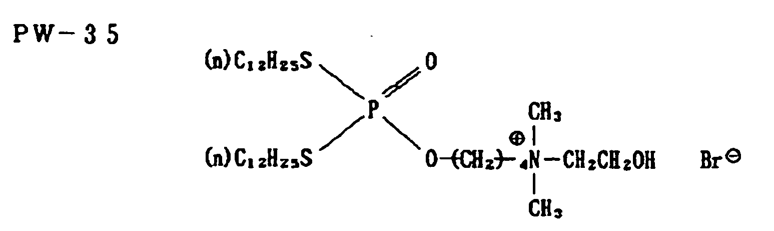

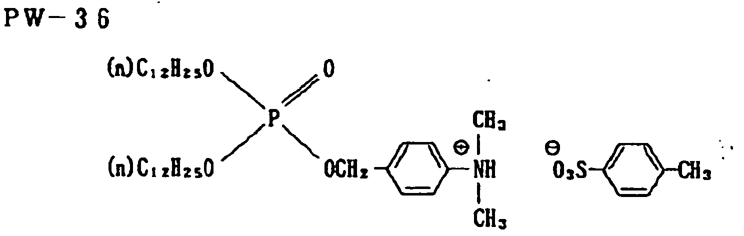

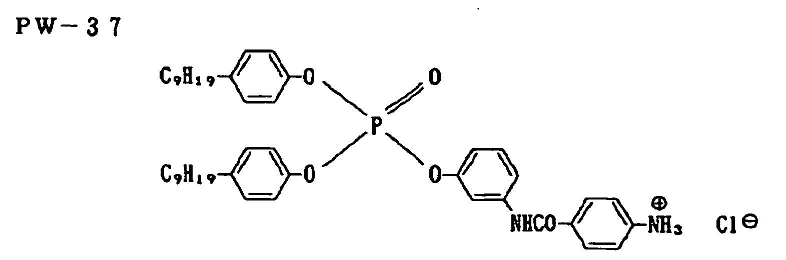

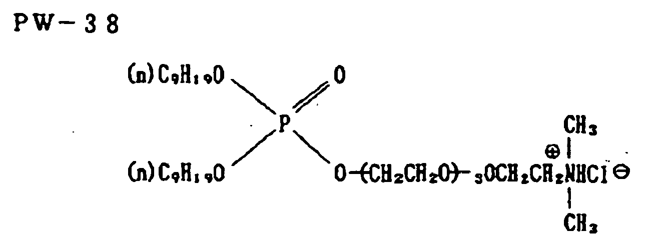

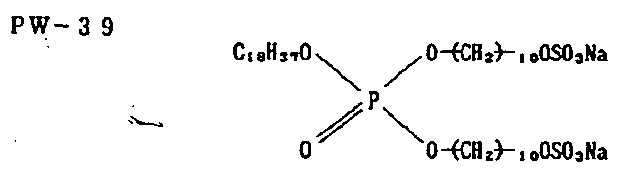

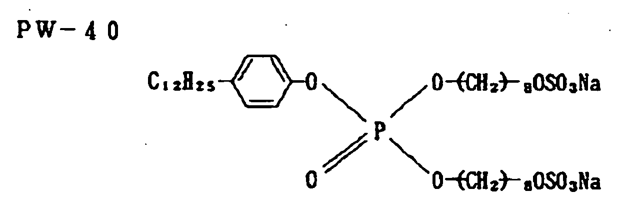

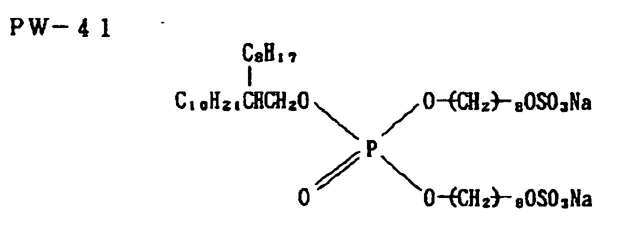

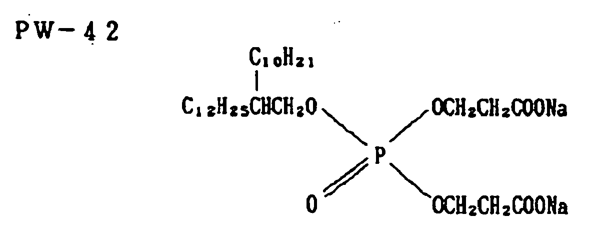

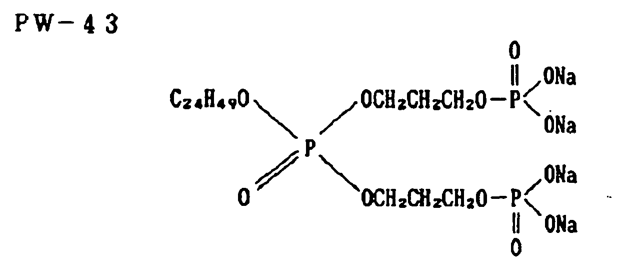

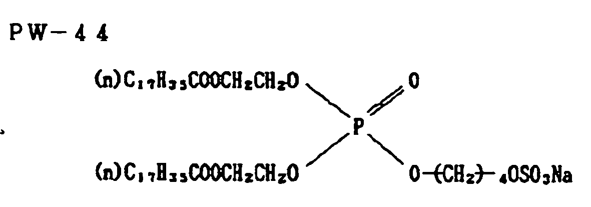

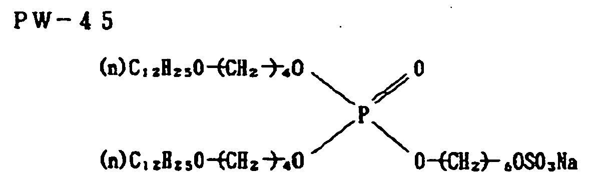

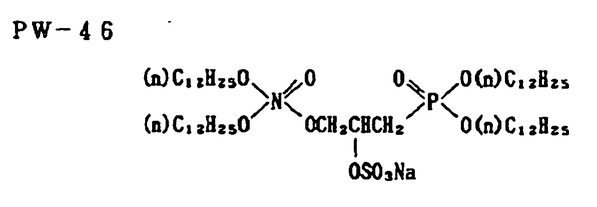

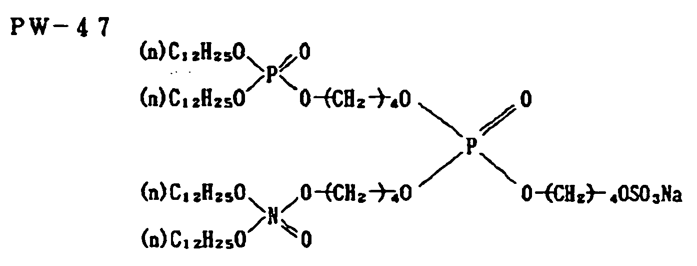

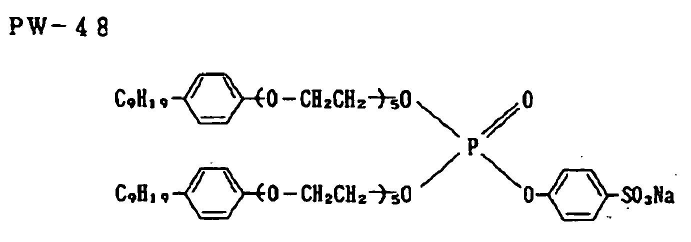

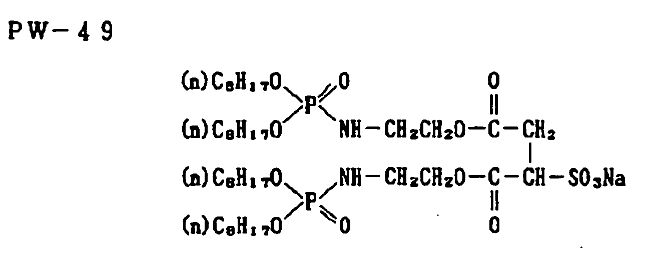

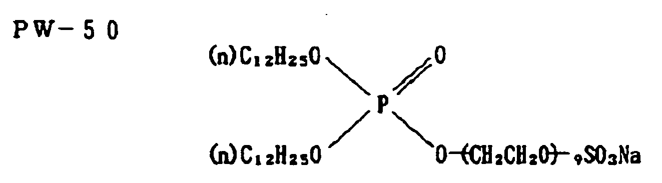

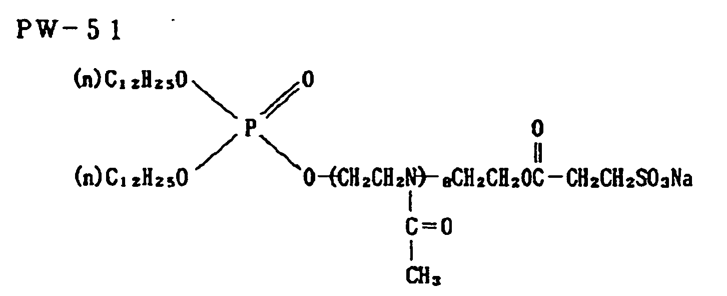

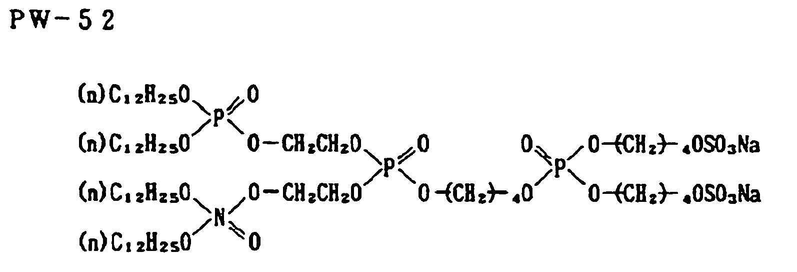

It is possible to form a film having a honeycomb structure using the hydrophobic polymer alone, however, it is preferable to use the hydrophobic polymer along with an amphipathic compound.

When the amphipathic compound is an amphipathic polymer, the composition ratio (mass ratio) of the hydrophobic polymer to the amphipathic compound is preferably 99.9:0.1 to 50:50, and more preferably 95:5 to 75:25.
When the composition ratio of the amphipathic compound is less than 1% by mass, a uniformly formed film having a honeycomb structure may not be obtained. In contrast, when the composition ratio of the amphipathic compound is more than 50% by mass, the stability of the film, in particular, sufficient dynamic stability may not be obtained.

When the amphipathic compound is not an amphipathic polymer, the composition ratio (mass ratio) of the hydrophobic polymer to the amphipathic compound is preferably 99.9:0.1 to 80:20. When the composition ratio of the amphipathic compound is less than 0.1 % by mass, a uniformly formed film having a honeycomb structure may not be obtained. In contrast, when the composition ration of the amphipathic compound is more than 20% by mass, it may negatively affect the film strength because the amphipathic compound has a low molecular weight.

It is also preferable that the hydrophobic polymer and the amphipathic polymer be polymerization (cross-linking) polymers having a polymerization group in the molecules. In addition, it is also preferable that a polyfunctional polymerization polymer be compounded along with the hydrophobic polymer and/or the amphipathic polymer to form a honeycomb-like film by use of the compound and then be subjected to a curing treatment by one of the methods known in the art such as a heat curing method, a ultraviolet curing method, and an electron radiation curing method.

For the polyfunctional monomer to be used in combination with the hydrophobic polymer and/or the amphipathic polymer, it is preferable to use polyfunctional (meth)acrylates from the perspective of reactivity. It is possible to use polyfunctional (meth)acrylates such as dipentaerithritol pentaacrylate, dipentaerithritol hexaacrylate, hexaacrylates of dipentaerithritol caprolacton adducts or modified products thereof, epoxyacrylate oligomers, polyester acrylate oligomers, urethane acrylate oligomers, N-vinyl-2-pyrolidone, tripropylene glycol diacrylate, polyethylene glycol diacrylate, trimethylol propane triacrylate, pentaerythritol triacrylate, pentaerythritol tetraacrylate, or modified products thereof. Each of these polyfunctional monomers may be used alone or in combination of two or more depending on the balance between abrasion resistance and flexibility.

When the hydrophobic polymer and the amphipathic polymer are respectively a polymerization (cross-linking) polymer having a polymerization group in the molecules, it is also preferable that a polyfunctional polymerization monomer capable of reacting with polymerization groups of the hydrophobic polymer and the amphipathic polymer be used along with the hydrophobic polymer and the amphipathic polymer.

A monomer having ethylene-unsaturated groups is polymerizable by applying ionization radiation to the monomer or by heating the monomer in the presence of a photo-radical initiator or a thermal-radical initiator.

Specifically, a coating solution containing a monomer having an ethylene-unsaturated group, a photo-radical initiator or a thermal-radical initiator, mat particles, and an inorganic filler, is prepared; the coating solution is applied over a surface of a transparent substrate; and then the substrate surface is cured by means of a polymerization reaction by applying ionization radiation or heating to thereby form an antireflection film.

Examples of the photo-radical polymerization initiator include acetophenones, benzoins, benzophenones, phosphine oxides, ketals, anthraquinones, thioxanthones, azo compounds, peroxides, 2, 3-alkyl dione compounds, disulfide compounds, fluoro amine compounds, and aromatic sulforuums.

Examples of the acetophenones include 2, 2-ethoxy acetophenone, p-methyl acetophenone, 1-hydroxydimethyl phenyl ketone, 1-hydroxy cyclohexyl phenyl ketone, 2-methyl-4-methylthio-2-morphorino propiophenone, and 2-benzil-2-dimethylamino-1-(4-morphorinophenyl)-butanone.

Examples of the benzoins include benzoin-benzene sulfonate esters, benzoin-toluene sulfonate esters, benzoin methyl ethers, benzoin ethyl ethers, and benzoin isopropyl ethers.

Examples of the benzophenones include benzophenones, 2, 4-chlorobenzophenone, 4, 4-dichlorobenzophenone, and p-chlorobenzophenone.

Examples of the phosphine oxides include 2, 4, 6-trimethyl benzoyl diphenyl phosphine oxide.

With respect to the photo-radical polymerization initiator, various examples are described in the "The Latest UV Curing Technology" (on page 159, issued by Kazuhiro Takausu, TECHNICAL INFORMATION INSTITUTE CO., LTD. in 1991).

Preferred examples of commercially available photofragmentation type photo-radical polymerization initiators include Irgacure (651, 184, and 907) or the like manufactured by Chiba Specialty Chemicals K.K.

The photo-polymerization initiator is preferably used within the range of 0.1 parts by mass to 15 parts by mass, and more preferably used within the range of 1 part by mass to 10 parts by mass relative to 100 parts by mass of the polyfunctional monomer.

In addition to the photo-polymerization initiator, a photosensitizer may be used. Specific examples of the photosensitizer include n-butylamines, trimethyl amines, tri-n-butyl phosphine, Michler 's ketone, and thioxanthones.

As for the thermal-radical initiator, it is possible to use, for example, organic peroxides, inorganic peroxides, organic azo compounds, and organic diazo compounds.

Specific examples of the organic peroxides include benzoyl peroxides, halogen benzoyl peroxides, lauroyl peroxides, acetyl peroxides, dibutyl peroxides, cumene hydroperoxides, and butyl-hydroperoxides. Examples of the inorganic peroxides include hydrogen peroxides, ammonium persulfates, and potassium persulfates. Examples of the azo compounds include 2, 2'-azobis (isobutylonitrile), 2, 2'-azobis(propionitrile), and 1, 1'-azobis(cyclohexane carbonitrile). Examples of the diazo compound include diazoaminobenzene, and p-nitrobenzene diazonium.

The honeycomb structure in the honeycomb-like porous film produced by self-organization means a structure in which holes formed in a given shape and in a given size are continuously arrayed with regularity. This regular array is allowed two-dimensionally when the honeycomb-like porous film is a single layer, and it is allowed to have regularity three-dimensionally when the honeycomb-like porous film is a multilayer. Two-dimensionally, the regularity takes a structure in which one hole is arranged so as to be surrounded by a plurality of holes, for example, 6 holes. Three-dimensionally, the regularity takes a structure like a face-centered cube of a crystalline structure or a hexagonal crystal and often takes a closest packed structure, however, the honeycomb-like porous film may show regularities other than the regularities depending on the production conditions.

When the film having a honeycomb structure is produced, it is essential to form microscopic water droplet particles on a polymer solution, and thus, the solvent to be used is preferably water-insoluble. Examples of the water-insoluble solvent include halogen-based organic solvents such as chloroform, and methylene chloride; aromatic hydrocarbons such as benzene, toluene, and xylene; esters such as ethyl acetate, and butyl acetate; water-insoluble ketones such as methylisobutyl ketone; ethers such as diethyl ether; and carbon disulfide. Each of these water-insoluble solvents may be used alone or used as a mixture solvent in a combination with two or more.

The combined polymer concentration of the hydrophobic polymer and the amphipathic polymer to be dissolved in the water-insoluble solvent is preferably 0.02% by mass to 20% by mass, and more preferably 0.05% by mass to 10% by mass. When the polymer concentration is less than 0.02% by mass, the dynamic strength of a film to be obtained may be insufficient, and there may be troubles that the size of microporous holes and the array become irregular. When the combined polymer concentration is more than 20% by mass, it may be difficult to obtain a satisfactory film having a honeycomb structure.

When the honeycomb-like porous film is stretched; the pore diameter of holes of the film having a honeycomb structure is preferably 50 µm or less, and more preferably 100 nm to 2,000 nm. When the pore diameter of the holes is greater than 50 µm, the film strength may be degraded, resulting in a tear of the film.

Here, in order to make the pore diameter of the holes small, in order to make the pore diameter of the film smaller, accelerating the drying in a speedy way is effective. For example, it is effective to use a low-boiling point solvent as the solvent for use, to increase the temperature of the substrate, to increase the developing rate of a developing solution to reduce the thickness of the developing solution at the early stage, and the like.

The thickness of the film having a honeycomb structure is preferably 0.1 µm to 1.0 µm. By increasing the polymer concentration to be developed, a relatively thick layer having no holes can be formed on the substrate surface side. In this case, the thickness of the relatively thick layer having no holes on the substrate surface side is preferably 500 µm or less.

### - Exfoliation Layer -

The exfoliation layer is formed in order to easily strip a provisional substrate from the film having a honeycomb structure. Since the honeycomb composite film has such an exfoliation layer, the honeycomb composite film can be used after the provisional substrate and the exfoliation layer are stripped from the honeycomb composite film.

The exfoliation layer contains a releasing agent and further contains other components in accordance with the necessity.

The releasing agent is selected from an emulsion type, solvent type, or non-solvent type silicone resin, fluorine resin, aminoalkyd resin, polyester resin, and waxes. Each of these releasing agents may be used alone or in combination with two or more.

The other components are not particularly limited and may be suitably selected in accordance with the intended use, however, examples thereof include various additives.

The method for forming the exfoliation layer is not particularly limited and may be suitably selected in accordance with the intended use, however, examples thereof include a method of applying a coating solution for the exfoliation layer over the surface of the provisional substrate.

The coating method is not particularly limited and may be suitably selected in accordance with the intended use, and examples thereof include blade coating methods, air knife coating methods, gravure coating methods, roll-coating methods, spray-coating method, dip-coating methods, bar-coating methods, extrusion coating methods, and spin-coating methods.

The amount of the coating solution for releasing to be applied is preferably 0.4g/cm² to 3.0g/cm², and more preferably 0.5g/cm² to 2.0g/cm².

### - Provisional Substrate and Substrate -

The material used for the provisional substrate or the substrate is not particularly limited and may be suitably selected in accordance with the intended use, provided that the material is transparent and has a certain degree of strength. Examples of the material used for the provisional substrate or the substrate include inorganic materials such as glass, metals, and silicon wafers; polyesters such as polyethylene terephthalate, and polyethylene phthalate; polyolefins such as polyethylene, and polypropylene; organic materials which excel in organic solvent resistance such as polyamides, polyethers, polystyrenes, polyester amides, polycarbonates, polyphenylene sulfides, polyether esters, polyvinyl chlorides, polyacrylic acid esters, polymethacrylic acid esters, polyether ketones, and polyethylene fluorides; liquids such as water, liquid paraffins, and fluid polyethers.

The thicknesses of the provisional substrate and the substrate are not particularly limited and may be suitably selected in accordance with the intended use, provided that the provisional substrate and the substrate respectively have a thickness within the range typically employed, however, it is preferably 0.02 mm to 4.0 mm.

The water contact angle of a surface of the provisional substrate is preferably 2° to 120°. The water contact angle of the surface of the provisional substrate can be measured by using, for example, a solid-liquid interface analyzer, DropMaster 300 (manufactured by Kyowa InterFACE Science Co., Ltd.).

### - Stretching -

The honeycomb composite film can be obtained by stretching a film having a honeycomb structure produced as described above.

The stretching is preferably any one of stretching methods selected from uniaxial stretching, sequential biaxial stretching, simultaneous biaxial stretching, and triaxial stretching.

The stretching is not particularly limited and can be carried out by using various stretching machines. For example, it is possible to preferably utilize longitudinal uniaxial stretching machines which stretch a material in a direction of mechanical flow, and tentering stretching machines which stretch a material in a direction perpendicular to the mechanical flow direction.

The stretching magnification ratio is not particularly limited and may be suitably selected in accordance with the intended use. For example, when the film having a honeycomb structure is stretched in one direction, the stretching magnification ratio is preferably 1.05 times to 12 times, and more preferably 1.2 times to 10 times. In the case of biaxial stretching, the stretching magnification ratio is preferably 1.2 times to 60 times, and more preferably 1.5 times to 50 times, in dimensional magnification.

The stretching enables forming ellipsoidal or slit-like holes, particularly, enables forming holes each having an ellipsoidal or a slit-shaped opening on the surface of the film.

In this case, it is preferable that the holes open in an ellipsoidal or a slit-shaped form on the surface of the honeycomb-like porous film and be arrayed linearly from the perspective that a wire grid function can be exerted. The wire grid function will be hereinafter described.

### - Metal Layer -

It is preferable that a metal layer be formed on the surface of the film having open holes in an ellipsoidal or a slit-shaped form.

The metal used for the metal layer is preferably at least one selected from the group consisting of gold, silver, copper, aluminum, iron, nickel, titanium, tungsten, chrome, and alloys thereof.

The method for forming the metal layer is not particularly limited and may be suitably selected in accordance with the intended use, and examples of the method include plating method, printing methods, sputtering methods, CVD methods, vacuum evaporation methods, and electrocasting methods. Of these methods, vacuum evaporation methods, plating methods, and electrocasting methods are particularly preferable.

The thickness of the metal layer is not particularly limited and may be suitably selected in accordance with the intended use, for example, when the composite film has a structure in which only a metal layer is formed on the film surface and is used as a polarizing film, the thickness is preferably 50 nm to 1,000 nm.

The film having a honeycomb structure preferably has a metal layer in the holes of the film surface and has a wire grid function. Specifically, by making the film have a structure such that ellipsoidal or slit-like holes are arrayed linearly on the film surface, and the film has a metal layer in the holes, it is possible to form a structure closely resembling a structure in which a number of metal wires are arrayed so as to be parallel each other at regular intervals.

Examples of a method for forming a metal layer in the holes on the film surface include a method of which a film layer is formed on a surface of the film, and then the metal layer portions other than the holes are removed by etching.

### - Refractive Index Controlling Material -

It is preferable that a refractive index controlling material having a refractive index which is different from the refractive index of the film material be packed inside holes of the film having a honeycomb structure from the perspective that the phase difference function can be exerted.

The refractive index controlling material is not particularly limited and may be suitably selected in accordance with the intended use, provided that the material has a refractive index being different from that of the material of the honeycomb-like porous film which is produced by the self-organization. The refractive index controlling material may be any of (1) a low-refractive index material having a lower refractive index than that of the film material and (2) a high-refractive index material having a higher refractive index than that of the film material, however, the high-refractive index material is particularly preferable.

In the present invention, the refractive index represents each of individual refractive indexes of the honeycomb-like porous film material produced by the self-organization and the refractive index controlling material, and the each of the refractive indexes can be measured by using a commercially available refractometer (Abbe refractometer) in accordance with the method for measuring refractive indexes of plastics of ISO489 (1999) or JIS7142 (1996). It should be noted that each of the refractive indexes in the present invention is a value determined by using a D line of 589 nm as a wavelength of light. With respect to refractive indexes of existing polymer materials, they are known in the art and can be referred to various technical written sources, for example, descriptions of III-241- 244 of "Polymer Handbook - the second edition" edited by J. Brandrup, and E. H. Immergut, issued by John Wiley & Sons, Inc. in 1975.

Hereinafter, the refractive index controlling material will be described in detail. The refractive index controlling material is not particularly limited, provided that the material can be packed in the honeycomb-like porous film material and has a refractive index which is different from a refractive index of the film material. Polymer materials, inorganic materials or mixtures of a polymer material and an inorganic material can be preferably used. Of these materials, polymers capable of dissolving in water or an organic solvent, or a mixture of a polymer material and an inorganic material, in particular, inorganic fine particles are preferable.

The polymer used for the refractive index controlling material is not particularly limited and may be suitably selected from among those conventionally known in the art in accordance with the intended use. Examples thereof include vinyl polymers, condensation polymers such as polyurethanes, polyesters, polyamides, polyureas, polycarbonates, and polycarbodiimides.

Examples of monomers forming the vinyl polymers include vinyl esters, acrylamides, methacrylamides, olefins, styrenes, vinyl ethers, and other monomers.

Specific examples of the vinyl esters include aliphatic vinyl carboxylate vinyl esters which may have a substituent group, for example, vinyl acetate, vinyl propionate, vinyl butylate, vinyl isobutylate, vinyl caproate, and vinyl chloroacetate; aromatic vinyl carboxylate which may have a substituent group such as vinyl benzoate, 4-methyl vinyl benzoic acid, and vinyl salicylate.

Specific examples of the acryl amides includes acrylamide, 2-acrylamide-2-methyl propane sulfonic acid, N-monosubstituent acrylamide, N-disubstituent acrylamide (the substituent group is an alkyl group, an aryl group, or a silyl group which may have a substituent group, and examples thereof include methyl group, n-propyl group, isopropyl group, n-butyl group, tert-butyl group, tert-octyl group, cyclohexyl group, benzyl group, hydroxymethyl group, alkoxymethyl group, phenyl group, 2, 4, 5-tetramethylphenyl group, and 4-chlorophenyl group, and trimethylsilyl group).

Specific examples of the methacrylamides include methacrylamides, N-monosubstituent methacrylamides, N-disubstituent methacrylamides (the substituent group is an alkyl group, an aryl group, or a silyl group which may have a substituent group, and examples thereof include methyl group, n-propyl group, isopropyl group, n-butyl group, tert-butyl group, tert-octyl group, cyclohexyl group, benzyl group, hydroxymethyl group, alkoxymethyl group, phenyl group, 2, 4, 5-tetramethylphenyl group, 4-chlorophenyl group, and trimethylsilyl group).

Examples of the olefins include ethylene, propylene, 1-pentene, vinyl chloride, vinylidene chloride, isoprene, chloroprene, and butadiene. Examples of the styrenes include styrene, methylstyrene, isopropylstyrene, methoxystyrene, acetoxystyrene, and chlorostyrene. Examples of the vinyl ethers include methyl vinyl ether, butyl vinyl ether, hexyl vinyl ether, and methoxy ethyl vinyl ether.

Examples of the aforementioned other monomers include vinyl sulfonic acid, crotonic acid ester, itaconic acid ester, maleic acid diester, fumaric acid diester, methyl vinyl ketone, phenyl vinyl ketone, methoxyethyl vinyl ketone, N-vinyl oxazolidone, N-vinyl pyrolidone, vinylidene chloride, methylene malonnitrile, vinylidene, diphenyl-2-acryloil oxyethyl phosphate, diphenyl-2-methacryloil oxyethyl phosphate, dibutyl-2-acryloil oxyethyl phosphate, and dioctyl-2-methacryloil oxyethyl phosphate.

The polyurethane is basically the one that can be obtained by a polyaddition reaction between a diol compound and a diisocyanate compound, which are used as initial materials.

Specific examples of the diol compound, as nondissociative diols, include ethylene glycol, 1,2-propane diol, 1,3-propane diol, 1, 3-butanediol, 2, 3-butanediol, 2,2-dimethyl-1,3-propanediol, 1, 4-pentanediol, 2, 4-pentanediol, 3, 3-dimethyl-1, 2-butanediol, 2-ethyl-2-methyl-1, 3-propanediol, 1, 6-hexanediol, 2, 5-hexanediol, 2-methyl-2, 4-pentanediol, 2, 2-diethyl-1, 3-propanediol, 2, 4-dimethyl-2, 4-pentanediol, 2-methyl-2-propyl-1, 3-propanediol, 2, 5-dimethyl-2, 5-hexanediol, 2-ethyl-1, 3-hexanediol, 1, 2-octanediol, 2,2,4-trimethyl-1, 3-pentanediol,1,4-cyclohexanedimethanol, diethylene glycol, triethylene glycol, dipropylene glycol, tripropylene glycol, and polyethylene glycol (average molecular weight = 200, 300, 400, 600,1,000,1,500, or 4,000); polypropylene glycol (average molecular weight = 200, 400, or 1,000); polyester polyol; 2, 2-bis(4-hydroxyphenyl) propane, 4, 4'-dihydroxyphenyl sulfone, 2, 2-bis(hydroxymethyl) propionic acid, and 2, 2-bis(hydroxymethyl) butanoic acid.

Preferred specific examples of the diisocyanate include ethylene diisocyanate, isophorone diisocyanate, hexamethylene diisocyanate, 1, 4-cyclohexane diisocyanate, 2, 4-toluene diisocyanate,1, 3-xylene diisocyanate, 1, 5-naphthalene diisocyanate, m-phenylene diisocyanate, p-phenylene diisocyanate, 3,3'-dimethyl-4,4'-diphenylmethane diisocyanate, 3, 3'-dimethylbiphenylene diisocyanate, dicyclohexylmethane diisocyanate, and methylene bis(4-cyclohexyl isocyanate).

The polyester is basically the one that can be obtained by dehydration condensation between a diol compound and dicarboxylic compound.

Specific examples of the dicarboxylic compound include oxalic acid, malonic acid, succinic acid, glutaric acid, dimethyl malonic acid, adipic acid, pimelic acid, α, α-dimethyl succinic acid, acetone dicarboxylic acid, sebacic acid, 1, 9-nonane dicarboxylic acid, fumaric acid, maleic acid, itaconic acid, citraconic acid, phthalic acid, isophthalic acid, terephthalic acid, 2-butyl terephthalic acid, tetrachloro terephthalic acid, acetylene dicarboxylic acid, poly(ethylene terephthalate) dicarboxylic acid, 1, 2-cyclohexane dicarboxylic acid, 1, 4-cyclohexane dicarboxylic acid, ω-poly(ethyleneoxide) dicarboxylic acid, and p-xylylene dicarboxylic acid.

Each of these compounds may be used in a form of an alkyl ester of dicarboxylic acid (for example, dimethyl ester), or an acid chloride of dicarboxylic acid when the compound is subjected to a polycondensation reaction together with a diol compound, or may be used in a form of an acid anhydride, like maleic acid anhydride, succinic acid anhydride, and phthalic acid anhydride.

As for the diol compound, compounds selected from the same group as the diols described in the paragraph of the polyurethane can be used.

A typical method of synthesizing the polyester is a condensation reaction between the diol compound and dicarboxylic acid or the derivatives thereof, however, the polyester can be obtained by condensing a hydroxycarboxylic acid such as lactic acid, and 1, 2-hydroxystearic acid.

The polyamide can be obtained by polycondensation between a diamine compound and a dicarboxylic acid compound, polycondensation of an aminocarboxylic acid compound, or ring opening polymerization of lactams.

Examples of the diamine compound include ethylenediamine, 1, 3-propanediamine,1, 2-propanediamine, hexamethylenediamine, octamethylene diamine, o-phenylenedimamine, m-phenylenediamine, p-phenylenediamine, piperazine, 2, 5-dimethyl piperazine, 4,4'-diaminodiphenyl ether, 3, 3'-diaminodiphenyl sulfone, and xylylenediamine.

Examples of the aminocarboxylic acid include glycines, alanines, phenylalanines, ω-aminohexanoic acids, ω-aminodecanoic acids, ω-aminoundecylic acids, and anthranilic acids. Examples of monomers used for the ring opening polymerization include ε-caprolactam, azetidinone, and pyrolidone.

For the dicarboxylic acid compound, compounds selected from the same group as the dicarboxylic acids described in the paragraph of the polyester can be used.

The polyurea can be basically obtained by polyaddition between a diamine compound and diisocyanate compound or by a deammoniation reaction of a diamine compound and urea. For the diamine compound of the initial material, diamines described in the paragraph of the polyamide can be used. For the diisocyanate compound, compounds selected from the same group as the diisocyanates described in the paragraph of the polyurethane can be used.

The polycarbonate can be basically obtained by reacting a diol compound with phosgene or an ester carbonate derivative, for example, aromatic ester such as diphenyl carbonate. For the diol compound of the initial material, compounds selected from the same group as the diols described in the paragraph of the polyurethane can be used.

The polycarbodiimide can be obtained, basically, by a condensation reaction of a diisocyanate compound. For the diisocyanate compound of the initial material, compounds selected from the same group as the diisocyanates described in the paragraph of the polyurethane can be used.

Hereinafter, specific examples of refractive indexes of polymers usable for the film having a honeycomb structure of the present invention, and the refractive index controlling material will be described, however, the materials used in the present invention are not limited to the disclosed ones. It should be noted that each of the refractive indexes described below is a value of the solid content of each polymer.

Specific examples of the polymer include polytetrafluoroethylene (1. 35), polytrifluoroethyl acrylate (1.407), polytrifluoroethylmethacrylate (1.437); poly-t-butyl methacrylate (1.4638), poly-4-methylpentene (1. 466), polyvinyl acetate (1. 4665), polymethyl acrylate (1.4685), polymethyl methacrylate (1.4893), polycyclohexyl methacrylate (1. 5066), polyethylene (1. 51), polyacrylonitrile (1.52), polymethacrylonitrile (1.52), nylon 6 (1. 53), styrene-butadiene (25/75) copolymer (1.535), polybenzil methacrylate (1. 5680), polyphenyl methacrylate (1. 5706), polydiallyphthalate (1.572), polyethylene terephthalate (1.576), polyvinyl benzoate (1.5775), polystyrene (1.59 to 1. 592 (depending on the steric structure of the polymer)), poly-N-benzil methacrylamide (1.5965), poly-o-chlorostyrene (1. 6098), polyvinyl chloride (1.63), polysulfone (1. 63), polyvinyl naphthalene (1. 682), polyvinyl carbazole (1. 683), and polypentabromophenyl methacrylate (1. 71).

The inorganic material used for the refractive index controlling material is not particularly limited and may be suitably selected from among those conventionally known in the art in accordance with the intended use, however, particularly preferred examples of the inorganic material include titanium dioxide, zinc oxide, zinc sulfide, zinc carbonate, zirconium oxide, silicon oxide, tin oxide, magnesium carbonate, magnesium hydroxide, calcium carbonate, calcium sulfide, iron oxide, strontium carbonate, barium sulfate, calcium sulfate, aluminum hydroxide, silver iodide, aluminum silicate, calcium silicate, magnesium silicate, colloidal silica, colloidal alumina, alumina, zeolite, kaolin, talc, clay, diatom earth, satin white, and silious earth. Of these, metal oxides or metal sulfides are particularly preferable.

When the organic material is used as the refractive index controlling material, the organic materials may be used alone, or used as a mixture with the polymer material, however, it is particularly preferable that a mixture of the organic material with the polymer material be used, in view of the physical properties of the film and the subsequently performed stretching step. As the mixture, it is preferred that inorganic fine particles be used as the inorganic material and be mixed with a polymer.

It is also preferable that the refractive index controlling material has a polymerization group in the molecules. In addition, it is also preferable that a polyfunctional monomer be compounded with the refractive index controlling material, the compound be put in holes of the honeycomb-like porous film, and the honeycomb-like porous film be subjected to a curing treatment by a method known in the art such as a thermal curing method, a ultraviolet curing method, and an electron radiation curing method. Preferred polyfunctional monomers to be used in combination with the refractive index controlling material are same as those explained in the paragraph of the hydrophobic polymer. Preferred photo-radical initiators or thermal-radical initiators are also same as those explained in the paragraph of the hydrophobic polymer.

It is also preferable that the inorganic material be put in the holes of the honeycomb-like porous film, together with a polymerization polymer material and a polyfunctional monomer. Here, it is also preferable that the organic material be preliminarily subjected to a surface treatment, using a polymerizable surface treatment agent.

The method of putting the refractive index controlling material in the holes of the honeycomb-like porous film is not particularly limited and may be suitably selected in accordance with the intended use, and examples of the method include a method of which a refractive index controlling material in a molten state is packed in holes of a honeycomb-like porous film; a method of which a solution prepared with a solvent which does not dissolve the honeycomb-like porous film, is packed in the holes, and a method of which a monomer is packed in the holes, and then the honeycomb-like porous film is polymerized by heating or irradiation with light.

### (Method for Producing Honeycomb Composite Film)

The method for producing a honeycomb composite film includes an exfoliation layer forming step, a film preparation step, a stretching step, and a metal layer forming step, and further includes other steps in accordance with the necessity.

### - Formation of Exfoliation Layer -

The exfoliation layer forming step is a step in which an exfoliation layer is formed on a provisional substrate.

The method of forming the exfoliation layer is not particularly limited and may be suitably selected in accordance with the intended use, and examples thereof include a method of which a coating solution for the exfoliation layer is applied over the surface of the provisional substrate.

### - Formation of Film -

The film formation step is a step in which a solution containing an organic solvent and a high-polymer compound is cast on a substrate to form a film, droplets are formed in the film, and the organic solvent and the droplets are vaporized to thereby prepare a honeycomb-like porous film having holes in the film.

The casting method is not particularly limited and may be suitably selected in accordance with the intended use. Examples of the method include slide methods, extrusion methods, bar methods, and gravure methods.

As the environmental conditions under which the film is formed, the relative humidity is preferably within the range of 50% to 95%. When the relative humidity is less than 50%, the water condensation may be insufficient on the surface of the solvent, and when the relative humidity is more than 95 %, it is difficult to control the environmental conditions, which may hardly keep a uniform film.

As the environmental conditions under which the film is formed, besides relative humidity, it is preferable that steady wind of a constant airflow volume be applied to the substrate surface with the solution applied thereon. The air blasting speed is preferably 0.05 m/s to 20 m/s. When the air blasting speed is slower than 0.5 m/s, it may be difficult to control the environmental conditions. When the air blasting speed is faster than 20 m/s, it may cause distortion of the surface of the solvent, and a uniform film may not be obtained.

For the direction in which the steady wind is applied to the substrate surface, the film can be produced by applying steady wind in any one of the directions from 0°C to 90°C with respect to the substrate surface, however, in order to increase the uniformity of the film having a honeycomb structure, the direction is preferably 0°C to 60°C with respect to the substrate surface.

As a humidity and airflow-volume controlled gas to be delivered when the film is formed, for example, it is possible to use inactive gas such as nitrogen gas, and argon gas, besides air, however, it is preferable that the gas be preliminarily subjected to a dust-removal treatment, for example, by passing the gas through a filter. Since dust in the atmosphere become condensation nucleus to affect formation of films, it is preferable to set a dust-removal unit in manufacturing sites, too.

It is preferable that the environment in which the film is formed be strictly controlled, for example, by using a commercially available generator of constant dew point temperature and humidity. It is preferred that the airflow volume be controlled at a constant level using an air blower or the like, and a closed room be used to prevent influence from outside air. In addition, preferably, gas-inlet and exit paths and film-forming environments are set in the room such that the gas is substituted into a streamlined flow. Further, to control the quality of filin-formation, it is preferred to monitor the state of film-formation by using instruments for measuring temperature, humidity, airflow volume, and the like. To highly precisely control the pore diameter and the film thickness, it is necessary to strictly control these parameters, in particular, parameters of humidity and airflow volume.

### - Stretching -

The stretching step is a step in which the film having a honeycomb structure is stretched, and ellipsoidal or slit-like holes are formed in the film having a honeycomb structure.

The stretching is preferably any one of stretching methods selected from uniaxial stretching, sequential biaxial stretching, simultaneous biaxial stretching, and triaxial stretching.

The stretching may be carried out in any one of directions of a longitudinal direction and a lateral direction. When the stretching is carried out in a longitudinal direction, the stretching can be achieved by making the delivery speed of airflow at the exit side faster than the delivery speed of airflow at the inlet side, using one or more pairs of nip rolls. In contrast, when the stretching is carried out in a lateral direction, the stretching can be achieved by a method of which both ends of the film are held with a chuck, and the film is stretched in the width direction (tenter stretching). Each of these methods may be used alone or in combination with two or more for stretching.

### - Formation of Metal Layer-

The metal layer forming step is a step in which a metal layer is formed on a surface of the film. Examples of the method of forming the metal layer include plating method, printing methods, sputtering methods, CVD methods, vacuum evaporation methods, and electrocasting methods. Of these methods, vacuum evaporation methods, and electrocasting methods are particularly preferable.

Examples of the plating methods include electroplating methods, electroless plating methods.

For the electroless plating method, it is possible to use a method utilizing an oxidation-reduction reaction and a method utilizing a substitution reaction, and the like. For example, by utilizing a reaction of which ions of a metal to be plated show an autocatalystic reduction reaction in an electroless plating solution, it is possible to use a method of plating gold, silver, copper, nickel, palladium, or the like, and a method utilizing a silver mirror reaction.

The electrocasting means manufacturing or replication of metal products by electroplating.

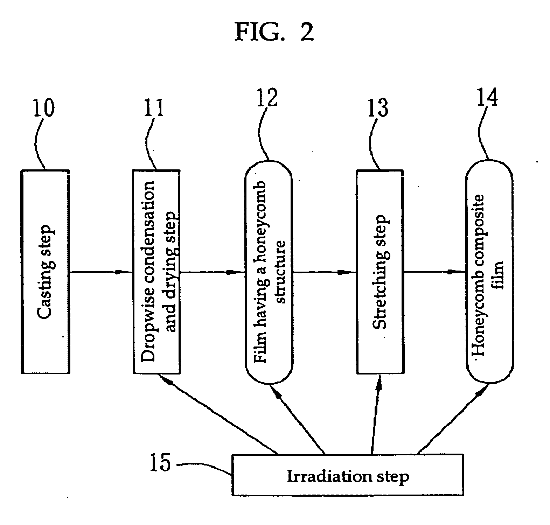

Here, FIG. 2 shows a process chart explaining one example of the method for producing a honeycomb composite film of the present invention. A high-polymer solution is cast on a surface of an exfoliation layer of a provisional substrate on which the exfoliation layer is preliminarily formed, and a film (hereinafter, it may be referred to as "high-polymer film") is formed by a casting step. Thereafter, water is made to condense itself to be contained as droplets in the high-polymer film, by a dropwise condensation and drying step 11. The dropwise condensation and drying step 11 will be described below in detail. The solvent of the high-polymer solution and droplets are vaporized to thereby obtain a film having a honeycomb structure 12. The film having a honeycomb structure 12 is stretched by a stretching step 13 to thereby obtain a honeycomb composite film 14. An irradiation step 15 may be carried out during the time when the honeycomb composite film 14 is obtained from the high-polymer film. In this case, ultraviolet rays and electron beam can be used as irradiation light. Further, it is also possible to carry out formation of a metal layer by which a metal layer is formed on the film surface, although the step is omitted in the figure.

As a material of the film having a honeycomb structure 12, a high-polymer compound which can be dissolved in the aforesaid water-insoluble solvent (hereinafter, it may be referred to as "hydrophobic polymer compound") is preferably used.

The film having a honeycomb structure 12 can be formed using the hydrophobic polymer alone, however, it is preferable to add an amphipathic material thereto. For the amphipathic material, it can be suitably selected from among the aforesaid materials for use.

As the solvent used for preparing a high-polymer solution in which each of the high-polymer compounds are dissolved, it can be suitably selected from among the aforesaid solvent materials for use.

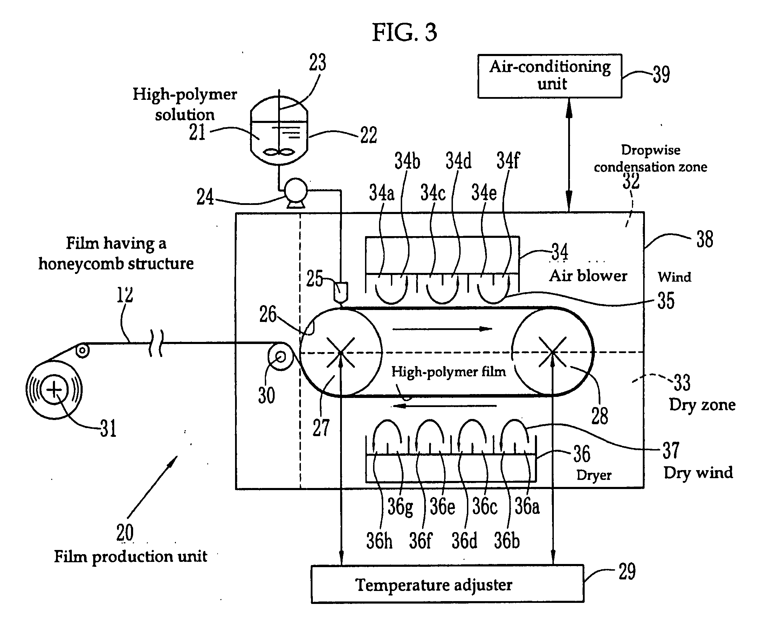

FIG. 3 is a schematic diagram showing one example of a film production unit 20 used for producing a honeycomb composite film 12 of the present invention. The high-polymer solution 21 is poured in a tank 22. The tank 22 is equipped with a stirring blade 23, and the high-polymer solution 21 is uniformly mixed by rotation of the stirring blade 23. The high-polymer solution 21 is delivered to a casting die 25 by action of a pump 24. The casting die 25 is mounted above a flow casting belt 26 which is spanned over rotation rollers 27 and 28. A driving unit (not shown) drives the rotation rollers 27 and 28 to rotate to thereby make the flow casting belt 26 driven to rotate in an endless manner. A temperature adjuster 29 is mounted at the rotation roller 27 and 28. By adjusting the temperature of the rotation rollers 27 and 28, the temperature of the flow casting belt 26 can be controlled. The film production unit 20 is also provided with a film-exfoliation roller 30 which supports a high-polymer film 40 when a high-polymer film 40 on the flow casting belt 26 is stripped, and a rewinder 31 which rewinds the high-polymer film 40 as a film.

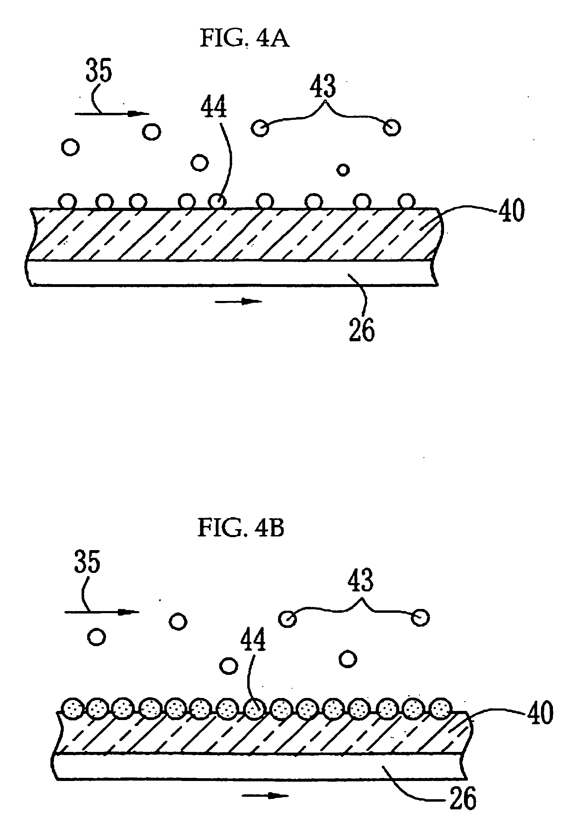

In the casting step 10, the high-polymer solution 21 is cast on the flow casting belt 26 from the casting die 25, and subsequently the dropwise condensation and drying step 11 is carried out. The dropwise condensation and drying step will be described with reference to FIGS. 4A to 4D. As shown in FIG. 4A, the high-polymer film 40 is formed on the flow casting belt 26. The surface temperature (hereinafter, it may be referred to as "film surface temperature") of the high-polymer film 40 is represented by TL (°C). In the present invention, the film surface temperature TL is preferably 0°C or more. When the film surface temperature TL is lower than 0°C, droplets in the high-polymer film 40 may coagulate only to prevent forming desired holes.

The casting chamber in which the high-polymer solution 21 is cast on the flow casting belt 26 is partitioned into a dropwise condensation zone 32 and a drying zone 33. An air blower 34 is provided in the dropwise condensation zone 32. Wind 35 adjusted by the air blower 34 for dropwise condensation is sent to the high-polymer film 40 on the flow casting belt 26. The air blower 34 is preferably composed of a plurality of blast units, as shown in FIG. 3, blast vents 34a, 34c, and 34e, and vacuum vents 34b, 34d, and 34f. This layout makes it easy to control conditions of dropwise condensation. In FIG. 3, an embodiment of an air blower which is composed of 3 units is illustrated, however, the present invention is not limited to the illustrated embodiment.

A dryer 36 is provided in the drying zone 33. Dry air 37 is sent from the dryer 36 to the high-polymer film 40. It is preferable that the dryer 36 be also composed of a plurality of blast units, as shown in FIG. 3, blast vents 36a, 36c, 36e and 36g, and vacuum vents 36b, 36d, 36f, and 36h. This layout makes it easy to control conditions of dying the high-polymer film 40. In FIG. 3, an embodiment of an air dryer which is composed of 4 units, is illustrated, however, the present invention is not limited to the illustrated embodiment.

It is more preferable to adjust the temperature of the flow casting belt 26 through rotation rollers 27 and 28 using the temperature adjuster 29. Examples of the method for adjusting the temperature include a method of which a liquid flow channel is provided inside of the rotation rollers 27 and 28, and a heating medium is sent to the liquid flow channel to thereby adjust the temperature of the flow casting belt 26. For adjusting the temperature, the lower limit temperature of the flow casting belt 26 is preferably 0°C or more. The upper limit temperature of the flow casting belt 26 is preferably set to the solvent boiling point of the high-polymer solution 21 or less, and more preferably set to 3°C lower than the solvent boiling point. With this configuration, condensed dropwise moisture does not coagulate, and it prevents the solvent of the high-polymer solution 21 from rapidly evaporating, and thus a film having a honeycomb structure 12 excelling in shape can be obtained. Further, for the temperature adjustment, by setting the temperature distribution of the high-polymer film 40 in the width direction within ± 3°C of the solvent boiling point, the film surface temperature distribution can also be set within ± 3°C of the solvent boiling point. By reducing the temperature distribution of the high-polymer film 40 in the width direction, it prevents occurrence of anisotropy in formation of holes of the film having a honeycomb structure 12. Thus, the commodity value is improved.

Further, the transportation direction of the flow casting belt 26 is preferably set at an angle within ± 10° to the horizontal direction. By controlling the transportation direction, the shape of droplets 44 can be controlled. By controlling the shape of the droplets 44, the shape of the holes can be controlled.

The dryer 34 is sending wind 35. The dew point TD1 (°C) of wind 35 is preferably 0°C ≦ (TD1-TL) °C, more preferably 0°C ≦ (TD1-TL) °C ≦ 80 °C, still more preferably 5°C to 60°C, and particularly preferably 10°C to 40°C relative to the surface temperature TL (°C) of the high-polymer film 40 which is passing through the dropwise condensation zone 32. When the temperature (TD1 - TL) °C is lower than 0°C, dropwise condensation may hardly occur, and when the temperature (TD1 - TL) °C is higher than 80°C, dropwise condensation and drying are precipitously induced, and control of the size of the holes and formation of the holes may be difficult with uniformity. The temperature of wind 35 is not particularly limited, may be suitably selected in accordance with the intended use, however, the temperature is preferably 5°C to 100°C. When the temperature of wind 35 is lower than 5°C, the liquid, in particular, water is hardly vaporized, and a film having a honeycomb structure 12 which is excellent in shape may not be obtained. When the temperature of wind 35 is higher than 100°C, water possibly vaporizes as water vapor before the droplets 44 are generated within the high-polymer film 40.

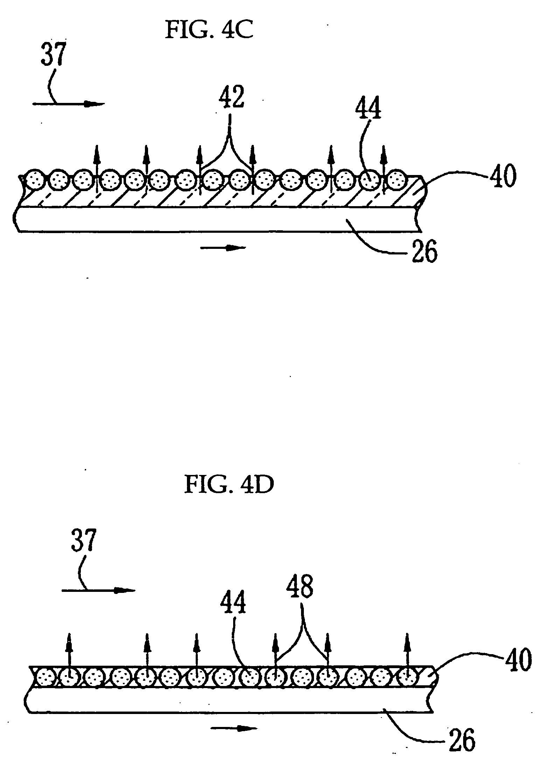

As shown in FIG. 4A, moisture 43 (illustrated visually) in wind 35 is condensed on the high-polymer film 40 to become droplets 44, in the dropwise condensation zone 32. Then, as shown in FIG. 4B, the moisture 43 is condensed to grow the droplets 44 as nuclear. With reference to FIG. 4C, when dry air 37 is sent to the high-polymer film 40 in the dry zone 33, an organic solvent 42 vaporizes from the high-polymer film 40. Here, moisture also vaporizes from the droplets 44, however, the vaporization rate of the organic solvent 42 is faster than that of the droplets 44. For the reason, the droplets 44 are substantially uniformly formed by surface tension, along with the vaporization of the organic solvent 42. Further, with advancing drying of the high-polymer film 40, as shown in FIG. 4D, moisture from the droplets 44 of the high-polymer film 40 vaporizes as water vapor 48. When the droplets 44 vaporize from the high-polymer film 40, the portions at which the droplets 44 are formed become holes 47, and a film having a honeycomb structure 12 as shown in FIGS. 5A, 5B, and 5C can be obtained. In the present invention, the form of the film having a honeycomb structure 12 is not particularly limited, however, specifically, the distance L2 between two adjacent holes 47, when measured as center-to-center spacing, can be controlled within the range of 0.05 µm to 100µm.

The direction to which the wind 35 is sent is the parallel current flow along the moving direction of the high-polymer film 40. When the wind 35 is sent as the counter current flow, the film surface of the high-polymer film 40 may be distorted, and the growth of the droplets 44 may be inhibited. As for the air blasting speed of wind 35 relative to the moving speed of the high-polymer film 40 is preferably 0.05 m/s to 20 m/s, more preferably 0.1 m/s to 15 m/s, and still more preferably 0.5 m/s to 10 m/s. When the air blasting speed is slower than 0.05 m/ s, the high-polymer film 40 is possibly sent to the dry zone 33 in a state where the droplets 44 are not sufficiently grown up in the high-polymer film 40. When the air blasting speed is faster than 20 m/s, the film surface of the high-polymer film 40 may be distorted, and dropwise condensation may not adequately make progress.

The time during the high-polymer film 40 is passing through the dropwise condensation zone 32 is preferably 0.1 seconds to 6,000 seconds. When the transit time is less than 0.1 seconds, it may be difficult to form desired holes, because the droplets are formed in a state where the droplets 44 are not sufficiently grown up in the high-polymer film 40. When the transit time is more than 6,000 seconds, the size of the droplets 44 is excessively large, and a film having a honeycomb structure may not be obtained.

The air blasting speed of the dry air 37 which dries the high-polymer film 40 at the dry zone 33 is preferably 0.05 m/s to 20 m/ s, more preferably 0.1 m/s to 15 m/ s, and still more preferably 0.5 m/ s to 10 m/ s. When the air blasting speed of the dry air 37 is slower than 0.05 m/s, vaporization of the moisture from the droplets 44 may not sufficiently make progress, and the productivity may be degraded. When the air blasting speed is faster than 20 m/ s, moisture from the droplets 44 rapidly vaporize, which may cause distortion of the holes 37 to be formed.

When the dew point of the dry air 37 is represented as TD2 (°C), it is preferable that the relation between the dew point and the film surface temperature TL (°C) be represented as (TL - TD2) °C ≧ 1°C. With this configuration, it is possible to stop the growth of the droplets 44 of the high-polymer film 40 at the dry zone 33 to volatilize moisture constituting the droplets 44 as water vapor 48.

For air blasting of wind from the air blower 34 to dry the high-polymer film 40, besides a method of sending wind by use of 2D nozzle, drying the high-polymer film 40 is enabled by a method of drying under reduced pressure. By drying the high-polymer film 40 under reduced pressure, each of the vaporization rates of the organic solvent 42 and the moisture 43 from the droplets 44 can be controlled. By controlling these vaporization rates, it is possible to form the droplets 44 in the high-polymer film 40 and vaporize the droplets 44 while vaporizing the organic solvent 42 to thereby change the size and the shape of holes 47 at the positions where the droplets reside on the high-polymer film 40.

It is also possible to dry the high-polymer film 40 by a method of drying under reduced pressure, and a method of which a condenser having grooves on the surface thereof which is more cooled than the film surface is provided at the position around 3 mm to 20 mm away from the film surface, and water vapor (including vaporized organic solvent) is condensed on the surface of the condenser to thereby dry the high-polymer film 40. Since the high-polymer film 40 can be dried with reducing dynamic influence upon the film surface of the high-polymer film 40 by using any one of the drying methods, it is possible to obtain a smoother film surface.

In addition, by utilizing a plurality of air blasting units of the air blower 34, and the dryer 36, and by partitioning the dry zone into plural zones, it is possible to set different conditions of dew point and to set different conditions of drying temperature. By selecting these conditions, the dimension controllability and the uniformity of holes 47 can be improved. It should be noted that the number of air blasting units and zones are not particularly limited, however, it is preferable to determine the optimum combination in view of quality of film and cost performance of units.

It is preferred that the relation between the film surface temperature TL (°C) and the dew point temperature TDn (°C) ("n" represents a zone number) of the dropwise condensation zone or the drying zone be represented as 0°C ≦ TDn - TL °C ≦ 80°C. By setting the difference between the film surface temperature TL (°C) and the dew point temperature TDn (°C) to 80°C or less, rapid vaporization of at least any one of the organic solvent and the moisture can be prevented to thereby obtain a film having a honeycomb structure 12 in a desired form. When impurities are mixed in the high-polymer film 40, the contamination causes an impediment in forming a honeycomb structure. To prevent the contamination, it is preferable that the dust level of the blast vents 34a, 34c, 34e, 36a, 36c, 36e, and 36g be class 1000 or less. To achieve the purpose, it is preferable that an air-conditioning unit 39 be mounted on a housing 38 in which the air blower 34 and the dryer 36 are equipped to perform air-conditioning inside the housing 38. With this configuration, the possibility that impurities are mixed in the high-polymer film 40 is reduced, and an excellent film having a honeycomb structure 12 can be obtained.

The film having a honeycomb structure 12 that the drying makes progress on the surface thereof is stripped from the flow casting belt 26 while being supported by the film-exfoliation roller 30 and then rewound to the rewinder 31. The transportation speed of the film having a honeycomb structure 12 is not particularly limited, however, it is preferably 0.1 m/min to 60 m/min. When the transportation speed is slower than 0.1 m/min, the productivity may degrade, and it is unfavorable in terms of cost performance. In contrast, when the transportation speed is faster than 60 m/ min, the film having a honeycomb structure 12 tears, because an excessive surface tension is given to the film having a honeycomb structure during the time when the film having a honeycomb structure 12 is transported, and it may be a cause of failures such as distortion of the film having a honeycomb structure. Through the above-noted methods, the film having a honeycomb structure 12 can be consecutively produced.

The obtained film having a honeycomb structure is subjected to a stretching treatment by the stretching step to thereby form ellipsoidal or slit-like holes on the film.

Further, a metal layer can also be formed on the film surface in accordance with the necessity.

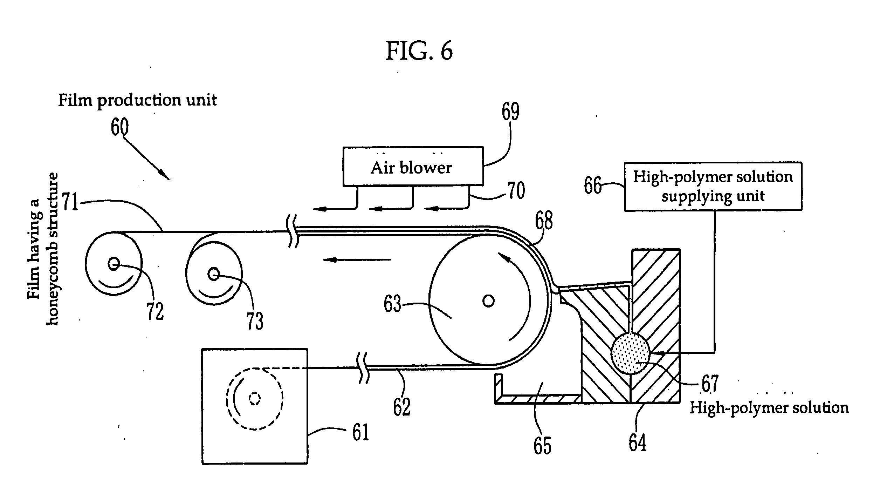

FIG. 6 shows another example of a film production unit used for the method for producing a honeycomb composite film of the present invention. A film 62 which is to be a substrate is transported from a film sender 61. The film 62 is transported with being wound on a backup roller 63. A slide coater 64 is arranged so as to face the backup roller 63. A depressurized chamber 65 is equipped with the slide coater 64. A high-polymer solution 67 sent from a high-polymer solution supplying unit 66 by a solution sending pump is pushed out from the slide coater 64 and is applied over the surface of the film 62 which is a substrate, thereby forming a high-polymer film 68.

The slide coater 64 excels in the uniform coating property in the transportation direction of the film 62 and enables forming the high-polymer film 68 at high speed, and thus it can be said as a coater which also excels in high-productivity. Even when the concave and convex portions are formed on the surface of the film 62 which is to be a substrate, the film 62 is smoothly formed when the film 62 is wound on the backup roller 63, and thus, the slide coater 64 also excels in the uniform coating property. Further, the slide coater 64 enables uniform coating, because the high-polymer solution 67 can be applied to the surface of the film 62 in non-contact with the film 62 by the slide coater 64, without hurting the surface of the film 62.

The high-polymer film 68 formed on the film 62 is subjected to a dropwise condensation and drying step 11 by use of wind 70 sent from an air blower 69. For the explanations of the dropwise condensation and drying step 11, the portions of the same conditions as the aforesaid explained portions will be omitted. After the high-polymer film 68 is subjected to the dropwise condensation and drying step 11, a film having a honeycomb structure 71 is rewound to a wind roll 72. The film 62 is also rewound to the wind roll 73. The transportation direction of the film 62 on which the high-polymer film 68 is to be formed is preferably set at an angle of within ± 10°C to the horizontal direction. It is more preferable that a material that easily absorbs the organic solvent of the high-polymer solution 66 be used for the film 62. The material is not particularly limited and may be suitably selected in accordance with the intended use, provided that the material absorbs the organic solvent. For example, when methyl acetate is used for the main solvent of the high-polymer solution 67, it is preferable to use cellulose acetate as the material of the film 62.

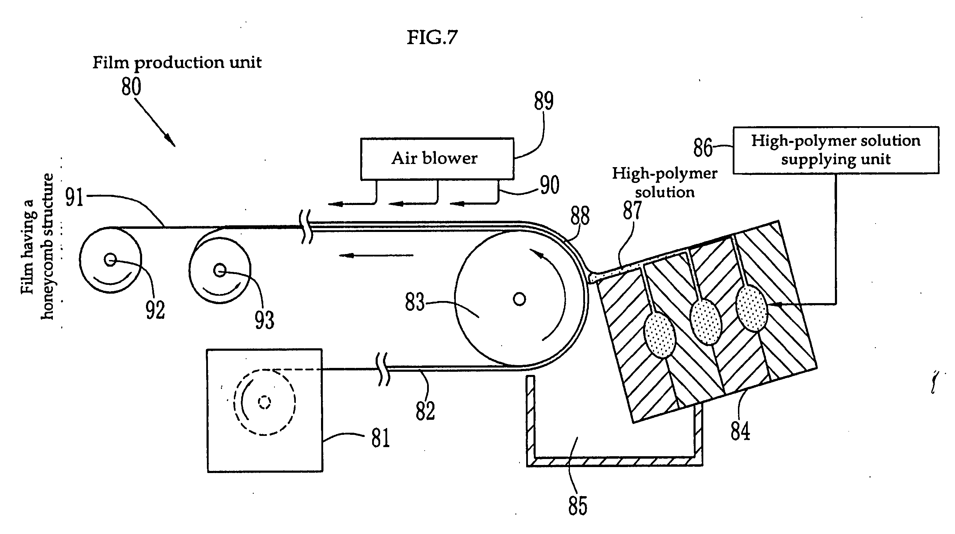

FIG. 7 shows yet another example of a film production unit 80 used for the method for producing a honeycomb composite film of the present invention. It should be noted that the explanations on the same portions as those of the film production unit 60 will be omitted. A film 82 which is to be a substrate is transported from a film sender 81 while being wound on a backup roller 83. A multilayer-type slide coater 84 is arranged so as to face the backup roller 83. A depressurized chamber 85 is equipped with the multilayer-type slide coater 84. A high-polymer solution 87 sent from a high-polymer solution supplying unit 86 by a solution sending pump is pushed out from the multilayer-type slide coater 84 and is applied over the surface of the film 82 to thereby form a high-polymer film 88. The high-polymer film 88 formed on the film 82 is subjected to a dropwise condensation and drying step 11 by use of wind 90 from an air blower 89. After the high-polymer film 88 is subjected to the dropwise condensation and drying step, a film having a honeycomb structure 91 is rewound to a wind roll 92.

The form of the film having a honeycomb structure 91 in the thickness direction, and the physical properties thereof can be changed by casting or applying a multilayered high-polymer solution 87 over the surface of the film 82.

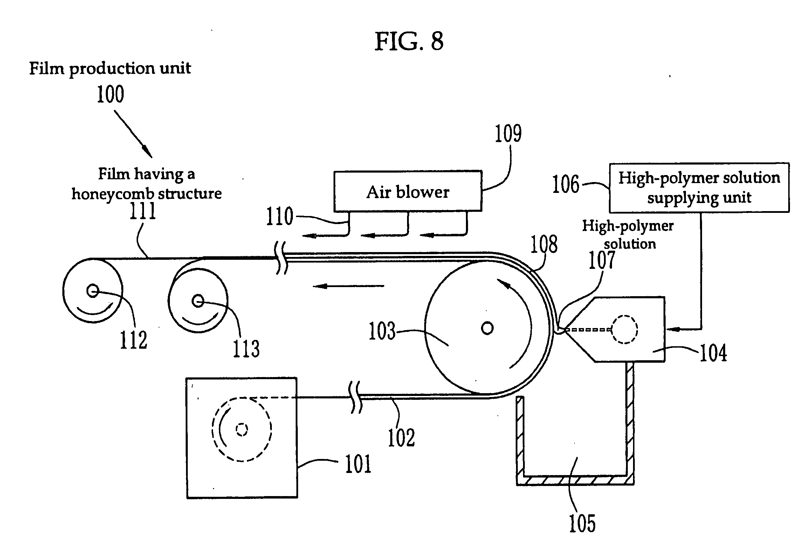

FIG. 8 shows still yet another example of a film production unit 100 used for the method for producing a honeycomb composite film of the present invention. It should be noted that the explanations of the same portions as those of the film production unit 60 will be omitted. A film 102 which is to be a substrate is transported from a film sender 101 while being wound on a backup roller 103. An extrusion coater 104 is arranged so as to face a backup roller 103. The extrusion coater 104 is equipped with a depressurized chamber 105. A high-polymer solution 107 sent from a high-polymer solution supplying unit 106 by a solution sending pump is pushed out from the extrusion coater 104 and is applied over the surface of the film 102 which is a substrate to thereby form a high-polymer film 108. The high-polymer film 108 formed on the film 102 is subjected to a dropwise condensation and drying step 11 by use of wind 110 from an air blower 109. After the high-polymer film 108 is subjected to the dropwise condensation and drying 11, a film having a honeycomb structure 111 is rewound to a wind roll 112.

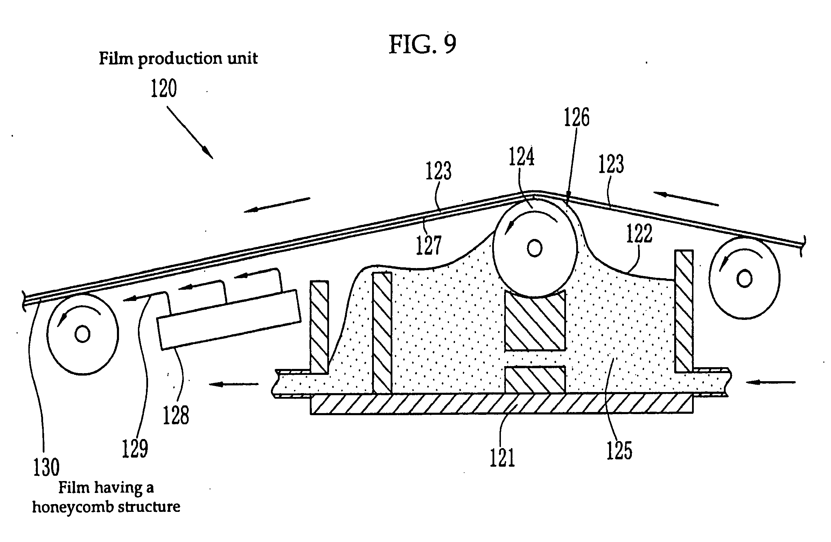

With reference to FIG. 9 showing a film production unit 120 which produces a honeycomb composite film of the present invention, the method for producing a honeycomb composite film will be explained. A high-polymer solution 122 is applied over the surface of a film 123 using a wire-bar coater 121. A wire bar which rotates in the moving direction of the film 123 moving at a constant speed pulls the high-polymer solution 122 out of a primary side of a high-polymer solution tank 125 up to a solution retaining portion 126. By making the high-polymer solution 122 in the solution retaining portion contact with the film 123 through the wire bar 124, a high-polymer film having a uniform thickness 127 can be formed. By subjecting the high-polymer film 127 to a dropwise condensation and drying step 11 by use of wind 129 from an air blower 128, a film having a honeycomb structure 130 can be obtained. According to the method for forming a film having a honeycomb structure 130 using the wire bar 124, the solution retaining portion 126 prevents air from getting mixed in the contact portion between the high-polymer solution 122 and the film 123, and thus the method is advantageous in that air bubbles are rarely mixed in the high-polymer film 127.

When the films 62, 82, 102, and 123 are used as a substrate, each of the films 62, 82, 102, and 123 and each of the films having a honeycomb structure 71, 91,111, and 130 can be rewound as an integrally formed film to use the film as a base film of the honeycomb composite film 14.

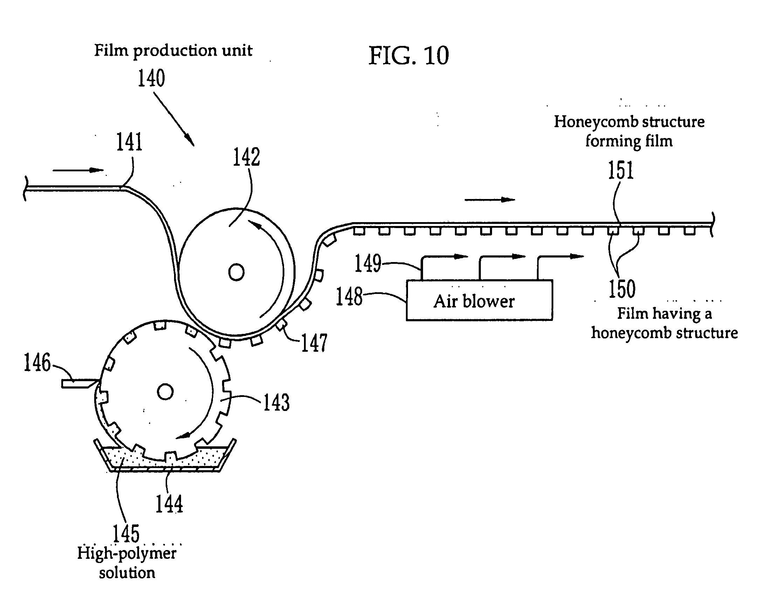

FIG. 10 shows a film production unit 140 used for producing a honeycomb composite film of the present invention. In the film production unit 140, a film 141 is transported while being wound on an impression cylinder 142. A printing cylinder 143 is arranged so as to face the impression cylinder 142. A desired pattern is formed on the surface of the printing cylinder 143. A high-polymer solution 145 poured in a high-polymer solution tank 144 accumulates in the convex portions of the printing cylinder 143 by rotation of the printing cylinder 143. An excessive amount of the high-polymer solution 145 is scooped out by a doctor blade 146. Thereafter, the high-polymer solution 145 is applied on the surface of the film 141 which is traveling in a state of being wound on the impression cylinder 142 to thereby form a high-polymer film 147.

The high-polymer film 147 is subjected to a dropwise condensation and drying step 11 by use of an air blower 148. The direction to which the wind 149 sent from the air blower 148 is sent is the parallel current flow, which is the same direction as the transportation direction of the film 141. The high-polymer film 147 is subjected to a dropwise condensation and drying step 11 to thereby form a film having a honeycomb structure 150. The film 141 becomes a honeycomb structure forming film 151 on which a film having a honeycomb structure 150 is formed with a desired pattern.

A honeycomb composite film of the present invention obtained in accordance with the method for producing a honeycomb composite film of the present invention may be used directly after the film is produced on an exfoliation layer which has been provided on the provisional substrate from the beginning, or may be used after the film is soaked in an appropriate solvent such as ethanol, and then the film is exfoliated from the exfoliation layer used in the production to be set on an intended base. When the honeycomb composite film is used after exfoliating it from an exfoliation layer, for the purpose of increasing adhesiveness with a new base material, an adhesive such as epoxy resin, and silane coupling agent, which fits the material and is suited to the quality of a desired base material may be used.

### Examples

Hereinafter, the present invention will be described in detail referring to specific examples, however, the present invention is not limited to the disclosed examples.

### Example 1

On one surface of a polyethylene terephthalate film having a thickness of 200 µm, a 3% by mass of a toluene solution made of a mixed resin of 100 parts by mass of a silicone resin (SRX-211, manufactured by Dow Corning Toray Co., Ltd.) and 0.6 parts by mass of a silicone resin (SRX-212, manufactured by Dow Corning Toray Co., Ltd.) was applied by use of a wire coater so as to have a thickness of 1µm after drying, and the film was dried at 120°C for 2 minutes, thereby preparing a provisional substrate with an exfoliation layer formed thereon.

Next, a polystyrene of a weight average molecular weight of 45,000 was mixed with an amphipathic polymer of a weight average molecular weight of 50,000 represented by the following structure formula, at a mass ratio of 10:1 (0.4% by mass as polymer concentration) to thereby prepare 0.5 mL of a methylene chloride solution.

Next, the total amount of the methylene chloride solution was applied on a glass substrate for HDD which was kept warm at 2°C in a confined space that was free from outside influence, and air of constant humidity having a relative humidity of 70% was sprayed from the direction of an angle of 45° relative to the substrate surface at a constant flow rate of 2L/m to vaporize methylene chloride and to thereby obtain a film having a honeycomb structure having a uniform thickness. The surface of the provisional substrate on which the exfoliation layer was formed thereon was bonded to a surface of the film having a honeycomb structure, and the film having a honeycomb structure was stripped along with the provisional substrate from the glass substrate for HDD to thereby obtain a honeycomb composite film. The air of constant humidity was supplied after connecting a humidity generator manufactured by Yamato Scientific Co., Ltd. to a compressor SC-820 manufactured by Hitachi Koki Co., Ltd., equipped with a commercially available dust removing air filter (rated filtration: 0.3 µm). The measured flow rate of the air at the spraying part was 0.3 m/s. The water contact angle of the surface of the provisional substrate was measured using a solid-liquid interface analyzer, DropMaster 300 (manufactured by Kyowa InterFACE Science Co., Ltd.), and the measured result was 70°.

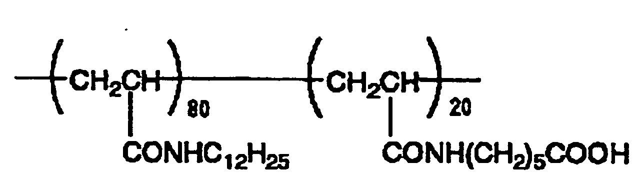

The structure of the obtained film was observed using a field emission scanning electron microscope (S4300, manufactured by Hitachi High-Technologies Corporation), and it was confirmed that a film having a honeycomb structure in which holes having a pore diameter of 5 µm were arranged in a hexagonal form with regularity. The interval of center-to-center spacing between two adjacent holes was 5.7µm. The holes were formed in a single layer so as to completely pass through from the top surface of the film to the back side surface. The holes ranged over the film almost entirely, and each of the holes was spherically shaped.

Next, the obtained honeycomb composite film was subjected to a sterilization treatment step by electron irradiation and then wrapped up with a wrapping material that had been subjected to a sterilization treatment.

The obtained honeycomb composite film is easy to handle and can be exfoliated from the provisional substrate and used for various functional films for medical purpose such as cell culture materials, wound protective films, and films for transdermal absorption agents.

### Example 2

A honeycomb composite film was obtained in the same manner as in Example 1 except that a provisional substrate with an exfoliation layer formed thereon was also bonded to the backside surface of a film having a honeycomb structure. The structure of the obtained film was similar to the honeycomb composite film produced in Example 1.

### Example 3

A honeycomb composite film was obtained in the same manner as in Example 1 except that no exfoliation layer was formed on the backside surface of a film having a honeycomb structure of polyethylene terephthalate film, and an exfoliation layer was simply thermal compression bonded to the film having a honeycomb structure. The structure of the obtained film was similar to the honeycomb composite film produced in Example 1.

### < Evaluations >

The honeycomb composite films obtained in Examples 1 to 4 were evaluated as follows. Table 1 shows the evaluation results.
1) Evaluation 1 ... In order to evaluate the honeycomb composite films with respect to handling properties as a cell culture base material, each of the obtained honeycomb composite films was once encapsulated in a packing material made of an aluminum evaporation sheet by vacuum lamination and was stored for one week. Then, the each of the honeycomb composite films was taken out of the packing material by hand and sent on a glass dish in a state where each of the provisional substrates was removed. The each of the honeycomb composite films was used to carry out an experimental test of cell culture and was evaluated on whether the honeycomb composite film was excellent or not with respect to workability. These honeycomb composite films were observed with respect to whether or not the honeycomb composite film had some flaws, defects, or the like thereon.
2) Evaluation 2 ... In order to evaluate the honeycomb composite films with respect to handling properties to cinnamon absorber films or the like, each of the honeycomb composite films was preliminarily impregnated with hyaluronic acid, and the honeycomb composite films were attached on human skin. Then, these honeycomb composite films were observed with respect to whether or not the honeycomb composite film had some flaws, defects, or the like thereon.

As evaluation criteria, in both of the evaluations 1 and 2, handling properties of the honeycomb composite films were visually checked and evaluated as follows. The honeycomb composite film evaluated as fairly excellent was marked as A; the one evaluated as excellent was marked as B; the one evaluated as passable was marked as C; and the one evaluated as poor was marked as D.

**Table 1**

| | Evaluation 1 | Evaluation 2 |
|---|---|---|
| Ex.1 | B | B |
| Ex. 2 | A | A |
| Ex. 3 | A | A |

### Example 4

A mixture solution of a refractive index controlling material (dispersed mixture solution of acrylic polymer and TiO₂ mixed at a mass ratio of 70:30; refractive index of solid portion = 1.81) was packed inside holes of a honeycomb composite film of Example 1 which had not yet been subjected to electron irradiation by applying the mixture solution to the surface of the film under a slight pressure to immobilize the film. The film was held at both ends thereof with clips and stretched while being transported in the width direction. Then, the film was uniaxiallly stretched at a stretching degree of 200% to thereby produce a honeycomb composite film of Example 4.

The phase difference of the honeycomb structure portion of the obtained honeycomb composite film was measured, using Elipsometer M220 manufactured by JASCO Corporation. Specifically, the honeycomb composite film was tilted at 30° from the normal line of the film surface and was made to turn tree-sixty at intervals of 10° centering around the normal line for evaluation of the phase difference. The evaluation result is that the film exhibits a symmetrical index ellipsoid having a relatively great refractive index in the stretched direction, has phase difference functions as an A-plate, and is preferably used as a phase difference film.

### Example 5

A mixture solution of a refractive index controlling material (dispersed mixture solution of acrylic polymer and TiO₂ mixed at a mass ratio of 70:30; refractive index of solid portion =1.81) was packed inside holes of a honeycomb composite film of Example 2 which had not yet been subjected to electron irradiation by applying the mixture solution to the surface of the film under a slight pressure to immobilize the film. The film was held at both ends thereof with clips and stretched while being transported in the width direction. Then, the film was uniaxiallly stretched at a stretching degree of 200% to thereby produce a honeycomb composite film of Example 5.

The honeycomb structure portion of the obtained honeycomb composite film was evaluated in the same manner as in Example 4. The evaluation result is that the honeycomb composite film has phase difference functions as an A-plate and is preferably used as a phase difference film.

### Example 6

A mixture solution of a refractive index controlling material (dispersed mixture solution of acrylic polymer and TiO₂ mixed at a mass ratio of 70:30; refractive index of solid portion =1.81) was packed inside holes of a honeycomb composite film of Example 3 which had not yet been subjected to electron irradiation by applying the mixture solution to the surface of the film under a slight pressure to immobilize the film. The film was held at both ends thereof with clips and stretched while being transported in the width direction. Then, the film was uniaxiallly stretched at a stretching degree of 200% to thereby 6 produce a honeycomb composite film of Example 6.

The honeycomb structure portion of the obtained honeycomb composite film was evaluated in the same manner as in Example 4. The evaluation result is that the honeycomb composite film has phase difference functions as an A-plate and is preferably used as a phase difference film.

### < Evaluation >

Polarizing plates each having phase difference functions that were obtainable by bonding each of the honeycomb composite films obtained in Examples 4 to 6 to respective polarizing plates and exfoliating individual exfoliation layers of the films were visually checked with respect to the uniformity of liquid crystal display. Polarizing plates each having phase difference functions that were obtainable by bonding each of the honeycomb composite films produced in the same manner as in Examples 4 to 6 except that no provisional substrate was used to respective polarizing plates were also visually checked with respect to the uniformity of liquid crystal display for comparison with the former polarizing plates.

The comparison result is that nonuniformity was not recognized on any of the polarizing plates of Examples 4 to 6 of which a provisional substrate was used and bonded to each of the polarizing plates, and the polarizing plates showed excellent results. In contrast, the polarizing plates without using a provisional substrate caused nonuniform deformation during the bonding step, and color heterogeneity of images was visually recognized.

## Claims

1. A honeycomb composite film comprising:
a porous film having a honeycomb structure prepared by self-organisation;
a provisional substrate; and
an exfoliation layer between the porous film and the provisional substrate to facilitate exfoliation of the latter from the porous film;
**characterised in that** the exfoliation layer comprises a silicone resin, a fluorine resin, an aminoalkyd resin, a polyester resin or a wax.

2. A honeycomb composite film according to Claim 1, wherein the porous film has an exfoliation layer on each of both surfaces thereof, and a provisional substrate on each of the exfoliation layers.

3. A honeycomb composite film according to Claim 1 or Claim 2, wherein the porous film has an exfoliation layer on one surface thereof, a provisional substrate on the exfoliation layer, and a substrate on the opposite surface with no exfoliation layer formed thereon.

4. A honeycomb composite film according to any preceding Claim, wherein the water contact angle of a surface of the provisional substrate is 2° to 120°.

5. A honeycomb composite film according to any preceding Claim, wherein the film porous film is subjected to a stretching treatment.

6. A honeycomb composite film according to Claim 5, wherein the stretching is uniaxial stretching, sequential biaxial stretching, simultaneous biaxial stretching or triaxial stretching.

7. A honeycomb composite film according to any preceding Claim, wherein the porous film has a metal layer on a surface thereof.

8. A honeycomb composite film according to Claim 7, wherein the metal layer comprises gold, silver, copper, aluminum, iron, nickel, titanium, tungsten, chrome or an alloy of any thereof.

9. A honeycomb composite film according to any preceding Claim, wherein a refractive index controlling material is packed in holes of the porous film.

10. A honeycomb composite film according to any preceding Claim, wherein the porous film is formed from a hydrophobic polymer or an amphipathic compound.

11. A honeycomb composite film according to Claim 10, wherein the amphipathic compound is an amphipathic polymer.

12. A honeycomb composite film according to any preceding Claim, wherein the provisional substrate(s) and the exfoliation layer(s) are stripped before the honeycomb composite film is used.

13. Use of the honeycomb composite film as defined in any preceding Claim, as a retardation film, a polarizing film, a screen, a color filter, a display material, a cell culture material, a wound protective film, a film for a transdermal absorption agent, an acoustic oscillation material, a sound-absorbing material or a damping material.

14. A method for producing a honeycomb composite film comprising:
forming an exfoliation layer on a provisional substrate, the exfoliation layer comprising at least one of a silicone resin, a fluorine resin, an aminoalkyd resin, a polyester resin or a wax,
casting a solution comprising an organic solvent and a high-polymer compound on the exfoliation layer,
forming droplets in the obtained film, and
vaporizing the organic solvent and the droplets to produce a porous film having a honeycomb structure.

15. A method according to Claim 14, further comprising stretching the porous film.

16. A method according to any one of Claims 14 or 15, further comprising forming a metal layer on a surface of the porous film.

## Patentansprüche

1. Wabenstruktur-Kompositfolie bzw. -film, umfassend:
eine poröse Folie/einen porösen Film mit Wabenstruktur, hergestellt durch Selbst-Organisation;
ein vorläufiges Substrat; und
eine Ablöseschicht zwischen der porösen Folie/dem porösen Film und dem vorläufigen Substrat, um das Ablösen des letzteren von der porösen Folie/dem porösen Film zu erleichtern;
**dadurch gekennzeichnet, dass** die Ablöseschicht ein Silikonharz, ein Fluorharz, ein Aminoalkydharz, ein Polyesterharz oder einen Wachs umfasst.

2. Wabenstruktur-Kompositfolie bzw. -film gemäß Anspruch 1, worin die poröse Folie bzw. der poröse Film eine Ablöseschicht auf jeder der beiden Oberflächen hiervon, und ein vorläufiges Substrat auf jeder der Ablöseschichten aufweist.

3. Wabenstruktur-Kompositfolie bzw. -film gemäß Anspruch 1 oder Anspruch 2, worin die poröse Folie eine Ablöseschicht auf einer Oberfläche hiervon, ein vorläufiges Substrat auf der Ablöseschicht und ein Substrat auf der gegenüberliegenden Oberfläche ohne hierauf gebildete Ablöseschicht aufweist.

4. Wabenstruktur-Kompositfolie bzw. -film gemäß irgendeinem vorhergehenden Anspruch, worin der Wasserkontaktwinkel einer Oberfläche des vorläufigen Substrats 2° bis 120° beträgt.

5. Wabenstruktur-Kompositfolie bzw. -film gemäß irgendeinem vorhergehenden Anspruch, worin die poröse Folie/der poröse Film einer Streckbehandlung unterzogen ist.

6. Wabenstruktur-Kompositfolie bzw. -film gemäß Anspruch 5, worin das Strecken ein uniaxiales Strecken, sequenzielles biaxiales Strecken, simultanes biaxiales Strecken oder triaxiales Strecken ist.

7. Wabenstruktur-Kompositfolie bzw. -film gemäß irgendeinem vorhergehenden Anspruch, worin die poröse Folie/der poröse Film eine Metallschicht auf einer Oberfläche hiervon aufweist.

8. Wabenstruktur-Kompositfolie bzw. -film gemäß Anspruch 7, worin die Metallschicht Gold, Silber, Kupfer, Aluminium, Eisen, Nickel, Titan, Wolfram, Chrom oder eine Legierung von jeglichen hiervon umfasst.

9. Wabenstruktur-Kompositfolie bzw. -film gemäß irgendeinem vorhergehenden Anspruch, worin ein den Brechungsindex kontrollierendes Material in Löchern der porösen Folie vorliegt.

10. Wabenstruktur-Kompositfolie bzw. -film gemäß irgendeinem vorhergehenden Anspruch, worin die poröse Folie/der poröse Film aus einem hydrophoben Polymer oder einer amphipathischen Verbindung gebildet ist.

11. Wabenstruktur-Kompositfolie bzw. -film gemäß Anspruch 10, worin die amphipathische Verbindung ein amphipathisches Polymer ist.

12. Wabenstruktur-Kompositfolie bzw. -film gemäß irgendeinem vorhergehenden Anspruch, worin das/die vorläufige(n) Substrat(e) und die Ablöseschicht(en) abgelöst werden, bevor die Wabenstruktur-Kompositfolie verwendet wird.

13. Verwendung der Wabenstruktur-Kompositfolie bzw. -films gemäß irgendeinem vorhergehenden Anspruch als Retardationsfolie, Polarisationsfolie, Bildschirm, Farbfilter, Anzeigenmaterial, Zellkulturmaterial, Wundschutzfolie, Folie für ein transdermales Absorptionsmittel, akustisches Oszillationsmaterial, geräuschabsorbierendes Material oder Dämpfungsmaterial.

14. Verfahren zur Herstellung einer Wabenstruktur-Kompositfolie bzw. -films, umfassend:
Bilden einer Ablöseschicht auf einem vorläufigen Substrat, wobei die Ablöseschicht mindestens eines von einem Silikonharz, einem Fluorharz, einem Aminoalkydharz, einem Polyesterharz oder einem Wachs umfasst,
Beschichten einer Lösung, die ein organisches Lösungsmittel und eine hochpolymere Verbindung umfasst, auf die Ablöseschicht,
Bilden von Tröpfchen in dem erhaltenen Film, und
Verdampfen des organischen Lösungsmittels und der Tröpfchen, um eine poröse Folie bzw. einen Film mit Wabenstruktur herzustellen.

15. Verfahren gemäß Anspruch 14, ferner umfassend das Strecken des porösen Films/der porösen Folie.

16. Verfahren gemäß irgendeinem der Ansprüche 14 oder 15, ferner umfassend das Bilden einer Metallschicht auf einer Oberfläche der porösen Folie/des porösen Films.

## Revendications

1. Film composite en nid d'abeilles comprenant :
un film poreux ayant une structure en nid d'abeilles préparée par auto-organisation ;
un substrat provisoire ; et
une couche d'exfoliation entre le film poreux et le substrat provisoire pour faciliter l'exfoliation de ce dernier depuis le film poreux ;
**caractérisé en ce que** la couche d'exfoliation comprend une résine silicone, une résine fluorée, une résine amino-alkyde, une résine polyester ou une cire.

2. Film composite en nid d'abeilles selon la revendication 1, dans lequel le film poreux a une couche d'exfoliation sur chacune des deux surfaces de ce dernier, et un substrat provisoire sur chacune des couches d'exfoliation.

3. Film composite en nid d'abeilles selon la revendication 1 ou la revendication 2, dans lequel le film poreux a une couche d'exfoliation sur une surface de ce dernier, un substrat provisoire sur la couche d'exfoliation, et un substrat sur la surface opposée sans couche d'exfoliation formée dessus.

4. Film composite en nid d'abeilles selon l'une quelconque des revendications précédentes, dans lequel l'angle de contact avec l'eau d'une surface du substrat provisoire est de 2° à 120°.

5. Film composite en nid d'abeilles selon l'une quelconque des revendications précédentes, dans lequel le film poreux est soumis à un traitement d'étirage.

6. Film composite en nid d'abeilles selon la revendication 5, dans lequel l'étirage est un étirage uniaxial, un étirage biaxial séquentiel, un étirage biaxial simultané ou un étirage triaxial.

7. Film composite en nid d'abeilles selon l'une quelconque des revendications précédentes, dans lequel le film poreux a une couche de métal sur une surface de ce dernier.

8. Film composite en nid d'abeilles selon la revendication 7, dans lequel la couche de métal comprend de l'or, de l'argent, du cuivre, de l'aluminium, du fer, du nickel, du titane, du tungstène, du chrome ou un alliage de n'importe lequel d'entre eux.

9. Film composite en nid d'abeilles selon l'une quelconque des revendications précédentes, dans lequel une matière de commande d'indice de réfraction est versée dans des trous du film poreux.

10. Film composite en nid d'abeilles selon l'une quelconque des revendications précédentes, dans lequel le film poreux est formé d'un polymère hydrophobe ou d'un composé amphipathique.

11. Film composite en nid d'abeilles selon la revendication 10, dans lequel le composé amphipathique est un polymère amphipathique.

12. Film composite en nid d'abeilles selon l'une quelconque des revendications précédentes, dans lequel le(s) substrat(s) provisoire(s) et la ou les couche(s) d'exfoliation sont ôtés avant que le film composite en nid d'abeilles ne soit utilisé.

13. Utilisation du film composite en nid d'abeilles selon l'une quelconque des revendications précédentes, en tant que film de retardement, film de polarisation, écran, filtre coloré, matière d'affichage, matière de culture de cellules, film protecteur enroulé, film pour un agent absorbant transdermique, matière d'oscillation acoustique, matière absorbant le son ou une matière d'amortissement.

14. Procédé de production d'un film composite en nid d'abeilles comprenant :
la formation d'une couche d'exfoliation sur un substrat provisoire, la couche d'exfoliation comprenant au moins l'une d'une résine silicone, dune résine fluorée, d'une résine amino-alkyde, d'une résine polyester ou d'une cire,
la projection d'une solution comprenant un solvant organique et un composé de haut polymère sur la couche d'exfoliation,
la formation de gouttelettes dans le film obtenu, et
la vaporisation du solvant organique et des gouttelettes pour produire un film poreux ayant une structure en nid d'abeilles.

15. Procédé selon la revendication 14, comprenant en outre l'étirage du film poreux.

16. Procédé selon l'une quelconque des revendications 14 ou 15, comprenant en outre la formation d'une couche de métal sur une surface du film poreux.
